# EUROPEAN PATENT APPLICATION

(11) **EP 4 541 863 A1**
(43) Date of publication of application: **23.04.2025**
(21) Application number: 24207458.1
(22) Date of filing: 18.10.2024
(51) Int. Cl.: C09D 11/328, C09D 11/14, C09D 11/38

(54) **INKJET INK AND TABLET PRINTED MATTER**

(30) Priority: 20.10.2023 JP 2023180880
(71) Applicant: Toppan Holdings Inc., Tokyo 110-0016 (JP)
(72) Inventor: HASHIMOTO, Risa, Tokyo, 110-0016 (JP); KOSEKI, Seiya, Tokyo, 110-0016 (JP); HOSHINO, Yuichi, Tokyo, 110-0016 (JP); MIYAZAWA, Yasuhisa, Tokyo, 110-0016 (JP); TANIOKA, Takumi, Tokyo, 110-0016 (JP)
(74) Representative: Hoffmann Eitle

(57) **Abstract**

There is provided an inkjet ink having drying properties, lightfastness, and discharge stability and tablet printed matter including printed parts printed with the inkjet ink.

An ink according to this embodiment contains: Red No. 102; reduced isomaltulose; and, as a solvent, water, monohydric alcohol, and a wetting agent, in which the monohydric alcohol includes at least one type among ethanol, NPA, and IPA, the wetting agent includes at least one type of glycerol and PG, the compounding ratio of the Red No. 102 is in the range of 0.5 mass% or more and 3.0 mass% or less based on the total mass of the inkjet ink, the compounding ratio of the monohydric alcohol is in the range of 30 mass% or more and 60 mass% or less based on the total mass of the inkjet ink, and the compounding ratio of the wetting agent is in the range of 0.05 mass% or more and 10 mass% or less based on the total mass of the inkjet ink.

## Description

### Technical Field

The present invention relates to an inkjet ink and tablet printed matter.

### Background Art

Some inkjet printing inks (hereinafter also simply referred to as an "inkjet ink" or an "ink") are edible with use of food dyes, such as tar pigments, for example, as colorants.

Conventionally, some inkjet inks cause discoloration in which the color tone (hue) of the colorants has changed in printed characters, images, and the like due to the deterioration of the colorants or cause fading due to desaturation or the like of the colorants. For example, when the inkjet inks are insufficient in lightfastness, the colorants can be affected by light and decompose (undergo photolysis) to cause discoloration and/or fading (photodiscoloration and/or photofading). Such discoloration and/or fading is perceived as a decrease in visibility in printed characters, images, and the like (hereinafter collectively referred to as "printed images").

To suppress the discoloration and/or fading of the printed images, technologies are being developed, and various methods for suppressing the discoloration and/or fading have been proposed (e.g., PTL 1).

When characters or images are printed on tablets and the like, inkjet inks and the like containing food dyes having coloring properties are sometimes used to increase the visibility. Some food dyes contained in the inks and the like cause significant discoloration and/or fading due to light.

In recent years, a demand for inkjet inks having excellent drying properties has been increasing. Thus, when the content of drying solvents, such as alcohol (lower alcohol), contained in the inkjet inks is increased to enhance the drying properties of the inkjet inks, the drying on the nozzle liquid level of a nozzle provided in an inkjet printer is accelerated, deteriorating the dischargeability of the inkjet inks or causing the precipitation of the colorants. In particular, the inkjet inks containing Food Red No. 102 tend to deteriorate in the dischargeability of the inkjet inks.

In conventional technologies, when characters or images are printed on tablets and the like, a viscosity modifier has been sometimes added to the inkjet inks and the like to modify the viscosity of the inkjet inks and the like to obtain good printing characteristics, such as high ink droplet landing accuracy, for example.

As the viscosity modifier to modify the viscosity of the inkjet inks and the like, a non-volatile liquid, such as glycerol, or a thickener, such as sodium alginate or hydroxypropyl methylcellulose, for example, has been sometimes used.

However, the use of the non-volatile liquid, such as glycerol, as the viscosity modifier, has sometimes reduced the drying properties of the inkjet inks and the like.

When a solvent contained in the inkjet inks and the like is a fast-drying solvent (solvent containing a lower alcohol and water), the use of the thickener, such as sodium alginate or hydroxypropyl methylcellulose, as the viscosity modifier has reduced the solubility of the thickener in the fast-drying solvent, resulting in a decrease in the discharge stability of the inks and the like in some cases. The use of the thickener, such as sodium alginate or hydroxypropyl methylcellulose, as the viscosity modifier has accelerated the drying in the nozzle liquid level, resulting in a decrease in the discharge stability of the inks and the like in some cases.

Thus, in the inkjet inks and the like according to the conventional technologies, the drying properties, the lightfastness, and the discharge stability have had a trade-off relationship with one another in many cases.

### Citation List

### Patent Literature

PTL 1: JP 6389506 B

### Summary of Invention

### Technical Problem

The present invention has been made in view of the above-described point. It is an object of the present invention to provide an ink (inkjet ink) having drying properties, lightfastness, and discharge stability and a tablet (tablet printed matter) including printed parts printed with the ink (inkjet ink).

### Solution to Problem

To achieve the above-described object, an ink (inkjet ink) according to one aspect of the present invention contains: Red No. 102; reduced isomaltulose; and, as a solvent, water, monohydric alcohol, and a wetting agent, in which the monohydric alcohol includes at least one type among ethanol, NPA, and IPA, the wetting agent includes at least one type of glycerol and PG, the compounding ratio of the Red No. 102 is in the range of 0.5 mass% or more and 3.0 mass% or less based on the total mass of the inkjet ink, the compounding ratio of the monohydric alcohol is in the range of 30 mass% or more and 60 mass% or less based on the total mass of the inkjet ink, and the compounding ratio of the wetting agent is in the range of 0.05 mass% or more and 10 mass% or less based on the total mass of the inkjet ink.

Further, to achieve the above-described object, the tablet (tablet printed matter) according to one aspect of the present invention includes printed parts printed using the above-described ink (inkjet ink).

### Advantageous Effects of Invention

One aspect of the present invention can provide the inkjet ink having drying properties, lightfastness, and discharge stability and the tablet printed matter including printed parts printed with the inkjet ink.

### Brief Description of Drawings

FIGS. 1A to 1C are conceptual views for explaining the permeability and the lightfastness of an inkjet ink in an embodiment of the present invention;
FIG. 2 is a schematic cross-sectional view illustrating one example of a tablet (uncoated tablet) according to the embodiment of the present invention;
FIG. 3 is a schematic cross-sectional view illustrating one example of a tablet (film-coated tablet) according to the embodiment of the present invention;
FIG. 4 is one example of a printed image of the tablet (uncoated tablet) according to the embodiment of the present invention; and
FIG. 5 is one example of a printed image of the tablet (film-coated tablet) according to the embodiment of the present invention.

### Description of Embodiments

An inkjet ink (ink) according to an embodiment of the present invention (hereinafter referred to as "this embodiment") is an inkjet ink containing a viscosity modifier, and relates to, for example, an inkjet ink capable of sufficiently suppressing the photodiscoloration and/or photofading of printed images and the like printed by an inkjet printing method on the surfaces of medicine tablets and maintaining the lightfastness and having excellent discharge stability (intermittent resumability) and excellent drying properties, and tablet printed matter including printed parts printed with the inkjet ink. Hereinafter, the compositions of the inkjet ink and the tablet printed matter including printed parts printed with the inkjet ink according to the embodiment of the present invention are described in detail.

### [Composition of inkjet ink]

The inkjet ink according to this embodiment is an edible inkjet ink and contains Food Red No. 102 which is a food dye (food pigment) (hereinafter simply referred to as "Red No. 102"), reduced isomaltulose, and, as a solvent, water, monohydric alcohol, and a wetting agent, in which the monohydric alcohol includes at least one type among ethanol, NPA, and IPA, the wetting agent includes at least one type of glycerol and PG, the compounding ratio of the Red No. 102 is in the range of 0.5 mass% or more and 3.0 mass% or less based on the total mass of the inkjet ink, the compounding ratio of the monohydric alcohol is in the range of 30 mass% or more and 60 mass% or less based on the total mass of the inkjet ink, and the compounding ratio of the wetting agent is in the range of 0.05 mass% or more and 10 mass% or less based on the total mass of the inkjet ink.

The reduced isomaltulose used in this embodiment is a substance functioning as a viscosity modifier modifying the viscosity of the inkjet ink. The reduced isomaltulose is a substance also having fixability (ink fixability) fixing the ink to the surface of a printing target (e.g., solid formulation).

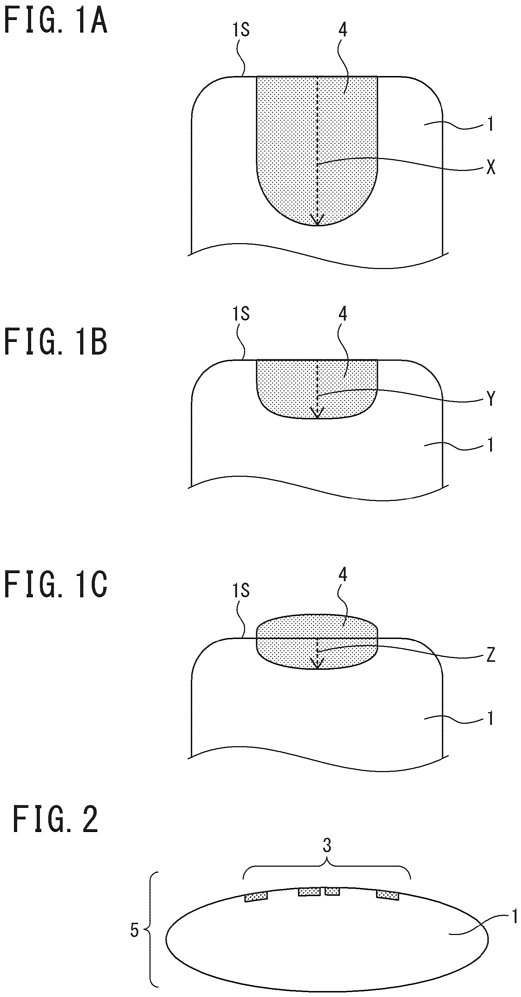

According to the above-described composition, photodiscoloration and/or photofading of printed images can be sufficiently suppressed, the lightfastness of the inkjet ink can be maintained, and both excellent discharge stability and excellent drying properties can be achieved. Hereinafter, the mechanism related to an improvement of the lightfastness is described with reference to FIGS. 1A to 1C. Thereafter, the mechanism related to an improvement of the discharge stability is described.

FIGS. 1A to 1C are conceptual views for explaining the relationship between the fixation and the lightfastness of the ink on the surface of the printing target (solid formulation). Herein, a tablet including a film-coated part having few voids, i.e., a film-coated (FC) tablet, is used as the solid formulation. The present invention is not limited thereto, and the printing target may also be an uncoated tablet or a capsule tablet.

FIGS. 1A to 1C are schematic cross-sectional views in the thickness direction of tablets (herein, film-coated tablets) after a certain period of time has passed from the printing of inkjet inks A to C having different compositions on the tablets. In this example, the inkjet ink A is an ink containing a specific dye 4 as a colorant, and a mixture containing water, the monohydric alcohol which is at least one type among ethanol, normal propyl alcohol (NPA), and isopropyl alcohol (IPA), and the wetting agent which is at least one type of glycerol and propylene glycol (PG) as the solvent. As the specific dye 4, the Red No. 102 can be exemplified.

The inkjet ink B is an ink obtained by adding a predetermined viscosity modifier to the inkjet ink A. Herein, the viscosity modifier added to the inkjet ink B is a viscosity modifier (e.g., maltose) having relatively high solubility in water and having relatively low ink fixability. The inkjet ink C is an ink obtained by adding the reduced isomaltulose which is a viscosity modifier having relatively high ink fixability to the inkjet ink A.

Specifically, FIG. 1A is a schematic cross-sectional view in the thickness direction of the tablet when a certain period of time (e.g., 140 hours) has passed from the printing of the inkjet ink A on a surface 1S of a substrate 1 of the tablet, the inkjet ink A containing the specific dye 4 as the colorant and containing the mixture containing water, the monohydric alcohol which is at least one type among ethanol, normal propyl alcohol (NPA), and isopropyl alcohol (IPA), and the wetting agent which is at least one type of glycerol and propylene glycol (PG) as the solvent. FIG. 1B is a schematic cross-sectional view in the thickness direction of the tablet when a certain period of time (e.g., 140 hours) has passed from the printing of the inkjet ink B on the surface 1S of the substrate 1 of the tablet. FIG. 1C is a schematic cross-sectional view in the thickness direction of the tablet when a certain period of time (e.g., 140 hours) has passed from the printing of the inkjet ink C on the surface 1S of the substrate 1 of the tablet.

First, the addition or non-addition of the viscosity modifiers and the permeability of the dyes in the inkjet inks are described taking the inkjet inks A, B as examples.

Among various colorants used for the inkjet inks, tar pigments used as the food dye, for example, can cause discoloration and/or fading in characters, images, and the like printed on the surfaces of solid formulations or the like. For example, the Red No. 102 among the tar pigments has caused discoloration and/or fading of the printed images due to permeation into the solid formulations with the lapse of time or photolysis. To address the problem, the permeation of the dye into the solid formulations can be suppressed and the discoloration and/or fading of the printed images can be suppressed by adding viscosity modifiers to the inkjet inks.

As illustrated in FIG. 1A, when the inkjet ink A containing no viscosity modifiers is printed, the specific dye 4 permeates into the substrate 1 of the tablet after the lapse of the certain period of time from the printing. Herein, the depth of the permeation of the specific dye 4 in the inkjet ink A after the lapse of the certain period of time is defined as a permeation depth X (pm). In contrast thereto, when the inkjet ink B containing the viscosity modifier (e.g., maltose) having relatively low ink fixability is printed, a permeation depth Y (µm) of the inkjet ink B is smaller than the permeation depth X of the inkjet ink A (X > Y) after the lapse of the certain period of time from the printing as illustrated in FIG. 1B.

In the inkjet ink B, the addition of the predetermined viscosity modifier increases the viscosity of the ink, for example, suppressing the permeation of the specific dye 4 into the substrate 1 of the tablet. Therefore, when the inkjet ink B is printed, the specific dye 4 remains in the vicinity of the surface 1S in the substrate 1 of the tablet even after the lapse of the certain period of time from the printing. More specifically, the inkjet ink containing the predetermined viscosity modifier can suppress the discoloration and/or fading of the printed images due to the permeation of the dye (i.e., Red No. 102) as compared with a case where no viscosity modifiers are added. Meanwhile, the inkjet ink B added with the predetermined viscosity modifier cannot sufficiently suppress the discoloration and/or fading (photodiscoloration and/or photofading) of the printed images due to irradiation with light in some cases.

In contrast thereto, the inkjet ink according to this embodiment fixes the ink to the surface of the printing target to sufficiently suppress the photodiscoloration and/or photofading of the printed images and enhance the lightfastness by selecting the type or the physical properties of the viscosity modifier (i.e., reduced isomaltulose, which is the viscosity modifier having relatively high ink fixability) and the solvent to be added. The present inventors have found that the fixing of the ink onto the surface of the printing target (e.g., tablet) is effective for suppressing the photodiscoloration and/or photofading of the printed images. In this example, the ink is fixed onto the surface 1S of the tablet to thereby fix the specific dye 4 onto the surface 1S, and, as a result, the specific dye 4 can be allowed to remain at a high density on the surface 1S.

A high density of the specific dye 4 on the surface 1S of the substrate 1 of the tablet reduces the proportion of the colorant causing the photodiscoloration and/or photofading due to the photolysis of the specific dye 4 on the surface 1S, for example. More specifically, even when the photodiscoloration and/or photofading occurs in a part of the specific dye 4, the influence is limited, and the decrease in visibility (readability) of the printed images is suppressed. Thus, the visibility of the whole printed images can be maintained, and, as a result, the photodiscoloration and/or photofading of the printed images can be sufficiently suppressed.
Therefore, the lightfastness of the inkjet ink can be enhanced. Then, the present inventors have found that the reduced isomaltulose having relatively low solubility in water among viscosity modifiers functions as a fixing agent fixing the ink containing the Red No. 102 as the colorant to the surface of the printing target.

Specifically, the inkjet ink according to this embodiment contains the Red No. 102 as the food dye, which is the colorant, and reduced isomaltulose having solubility in 100 ml of 20°C water of less than 39 g as the viscosity modifier. With such a composition, the ink containing the specific tar pigment (Red No. 102 in this example) used as the colorant can be fixed to the surface of the printing target, and the above-described specific tar pigment can be allowed to remain at a high density on the surface. Thus, the inkjet ink according to this embodiment can sufficiently suppress the photodiscoloration and/or photofading of the printed images and enhance the lightfastness.

As illustrated in FIG. 1C, when the inkjet ink C corresponding to the inkjet ink according to this embodiment is printed on the surface 1S of the substrate 1 of the tablet, the specific dye 4 (herein, Red No. 102) in the ink is fixed to the surface 1S. Specifically, when the inkjet ink C is printed, a permeation depth Z (um) of the specific dye 4 after the lapse of the certain period of time from the printing is further reduced as compared with the permeation depth Y of the specific dye 4 in the inkjet ink B containing the predetermined saccharides (Y > Z). For example, the permeation depth Z of the specific dye 4 in the inkjet ink C is reduced to about 50% of the permeation depth Y of the specific dye 4 in the inkjet ink B. More specifically, the inkjet ink C can further suppress the permeation of the specific dye 4. Therefore, the specific dye 4 remains at a high density on the surface 1S, and the decrease in the visibility of the printed images is suppressed as described above. Thus, the photodiscoloration and/or photofading of the printed images is sufficiently suppressed, and the inkjet ink C can enhance the lightfastness.

Meanwhile, the inkjet ink B allows the specific dye 4 to remain in the vicinity of the surface 1S inside the substrate 1 of the tablet, but the permeation of the specific dye 4 cannot be sufficiently suppressed and the ink cannot be fixed onto the surface 1S. More specifically, in the inkjet ink B, the density of the specific dye 4 remaining on the surface 1S is low, and therefore the photodiscoloration and/or photofading of the printed images cannot be sufficiently suppressed and the lightfastness is not enhanced (improved).

Thus, the inkjet ink according to this embodiment is added with the reduced isomaltulose as the viscosity modifier having ink fixability, and therefore the permeation of the specific tar pigment (Red No. 102) into the printing target is significantly suppressed and the ink is fixed to the surface of the printing target.
Thus, the inkjet ink according to this embodiment can suppress the photodiscoloration and/or photofading of the printed images and enhance the lightfastness, and further, can suppress even the discoloration and/or fading of the printed images due to the permeation of the specific tar pigment into the printing target.

As illustrated in FIG. 1C, the inkjet ink C can be fixed onto the surface 1S of the substrate 1 of the tablet to be slightly raised. Thus, when the inkjet ink C is printed, for example, the printing is perceived as deep and floating on the surface 1S. Therefore, the inkjet ink C can enhance the visibility in the printing of the printed images as compared with the inkjet inks A, B, for example. More specifically, the inkjet ink according to this embodiment can impart good visibility to the printed images at the time of the printing in addition to reducing the decrease in the visibility due to the photodiscoloration and/or photofading of the printed images.

Hereinafter, the details of the lightfastness in the inkjet ink according to this embodiment are described.

The inkjet ink according to this embodiment may have a color difference ΔE of 20 or less according to JIS Z 8781 before and after a lightfastness test. Herein, the lightfastness test refers to a test of comparing the color differences ΔE (according to JIS Z 8781) for the printed images printed using the inkjet ink according to this embodiment, for example, the color difference ΔE indicating the change in the chromaticity and the optical color density before and after irradiation with visible light. Specifically, the color difference ΔE is measured before and after the emission of a cumulative 1.2 million lux of visible light to the printed images, and the values are compared. For the irradiation with the visible light, a photostability tester (LT-120A-WD, Nagano Science) is used, for example. The printed images in the lightfastness test are solid-printed images solid-printed on a tablet (e.g., film-coated tablet), which is the printing target, for example.

The lightfastness necessary and sufficient for the formation of the printed images on medicine tablets and the like refers to, in the lightfastness test in which the printed images are irradiated with a 1.2 million lux of visible light, a case where the color difference ΔE of the printed images before and after the irradiation with the visible light is 20 or less in many cases. Use of the color difference ΔE of 20 or less as the criterion of sufficient lightfastness has been derived as a result of opinion tests carried out by the present inventors with medical professionals. When the color difference ΔE exceeds 20, a decrease in the visibility (e.g., readability of printing) of the printed images begins to be perceived. More specifically, when the color difference ΔE before and after the irradiation with the visible light is 20 or less, it can be said that the inkjet ink sufficiently suppresses the photodiscoloration and/or photofading and has excellent lightfastness. Although this numerical value is larger than the standard color difference ΔE of 3 to 6 in general commercial printed matter, tablets before and after the exposure to light are usually not compared, and the printed images of the tablet surfaces are assumed to naturally fade, and therefore this numerical value was able to be obtained.

Hereinafter, each component constituting the inkjet ink according to this embodiment is described.

### (Colorant)

As described above, the inkjet ink according to this embodiment contains the Red No. 102 as the food dye. The Red No. 102 is an edible tar pigment, and the Red No. 102 is also referred to as New Coccine.

In the inkjet ink according to this embodiment, the compounding ratio of the Red No. 102, i.e., the content of the Red No. 102, is preferably in the range of 0.5 mass% or more and 3.0 mass% or less based on the total mass of the ink. With such a composition, good visibility can be imparted to the printed images and excellent discharge stability (i.e., excellent intermittent resumability) can be imparted to the printed images. When the content of the Red No. 102 is in the range above, the addition of the reduced isomaltulose, which is the viscosity modifier having relatively high ink fixability, can more reliably allow the Red No. 102 to remain at a high density on the surface of printed matter to suppress the photodiscoloration and/or photofading in the printed images and reliably enhance the lightfastness of the inkjet ink according to this embodiment.

In contrast thereto, when the content of the Red No. 102 is less than 0.5 mass%, the whole printed color tends to be lighter and the visibility of the printed images tends to decrease. Further, when the content of the Red No. 102 is less than 0.5 mass%, the lightfastness decreases or the lightfastness is not exhibited in some cases when the printed tablet is stored.

When the content of the Red No. 102 exceeds 3.0 mass%, the dissolution stability of the colorant deteriorates, so that the pigment in the ink is precipitated or deposited as a solid, which can cause nozzle clogging of an inkjet head in printing, resulting in a decrease in the discharge stability.

The content of the Red No. 102 is more preferably in the range of 1.0 mass% or more and 2.5 mass% or less and still more preferably in the range of 1.0 mass% or more and 1.6 mass% or less based on the total mass of the ink. With such a composition, more excellent visibility can be imparted to the printed images and more excellent discharge stability can be imparted to the printed images.

The inkjet ink according to this embodiment may contain pigments (colorants) other than the above-described specific tar pigment, i.e., Red No. 102. The pigments other than the Red No. 102 are not particularly restricted insofar as they are edible. The pigments that can be added to the inkjet ink according to this embodiment can be appropriately selected from conventionally known synthetic food pigments and natural food pigments, for example, and added. When the inkjet ink according to this embodiment contains the colorants other than the Red No. 102 as the food dye, the total content of the food dyes other than the Red No. 102 is preferably in the range of 0.6 mass% or less, more preferably in the range 0.4 mass% or less, and still more preferably in the range of 0.3 mass% or less based on the total mass of the ink. When the total content of the food dyes other than the Red No. 102 is in the ranges above, good visibility can be imparted to the printed images while the lightfastness of the inkjet ink is enhanced and sufficient discharge stability can be imparted to the inkjet ink.

The synthetic food pigments include tar pigments, natural pigment derivatives, natural synthetic pigments, and the like, for example. The tar pigments include Food Red No. 2, Food Red No. 3, Food Red No. 40, Food Red No. 104, Food Red No. 105, Food Red No. 106, Food Yellow No. 4, Food Yellow No. 5, Food Blue No. 1, Food Blue No. 2, Food Red No. 2 Aluminum Lake, Food Red No. 3 Aluminum Lake, Food Red No. 40 Aluminum Lake, Food Yellow No. 4 Aluminum Lake, Food Yellow No. 5 Aluminum Lake, Food Blue No. 1 Aluminum Lake, Food Blue No. 2 Aluminum Lake, and the like, for example. The natural pigment derivatives include norbixin potassium and the like, for example. The natural synthetic pigments include β-carotene, riboflavin, and the like, for example.

The natural food pigments include anthocyanin pigments, carotenoid pigments, quinone pigments, chlorophyll pigments, flavonoid pigments, betaine pigments, monascus pigments, and pigments originating from other natural products, for example. The anthocyanin pigments include a red radish pigment, a red cabbage pigment, a red rice pigment, an elderberry pigment, a cowberry pigment, a gooseberry pigment, a cranberry pigment, a salmonberry pigment, a perilla pigment, a thimblueberry pigment, a strawberry pigment, a dark sweet cherry pigment, a cherry pigment, a hibiscus pigment, a huckleberry pigment, a grape juice pigment, a grape skin pigment, a black currant pigment, a blackberry pigment, a blueberry pigment, a plum pigment, a whortle berry pigment, a boysenberry pigment, a mulberry pigment, a purple potato pigment, a purple corn pigment, a purple yam pigment, a raspberry pigment, a red currant pigment, a loganberry pigment, and other anthocyanin pigments, for example. The carotenoid pigments include an annatto pigment, a gardenia yellow pigment, and other carotenoid pigments, for example. The quinone pigments include a cochineal pigment, a lithospermum root pigment, a lac pigment, and other quinone pigments, for example. The flavonoid pigments include a safflower yellow pigment, a kaoliang pigment, an onion pigment, and other flavonoid pigments, for example. The betaine pigments include a beet red pigment, for example. The monascus pigments include a monascus pigment and a monascus yellow pigment, for example. The pigments originating from other natural products include a turmeric pigment, a trichotomine pigment, a gardenia red pigment, a spirulina blue pigment, and the like, for example.

### (Viscosity modifier)

As described above, the inkjet ink according to this embodiment contains the viscosity modifier having ink fixability fixing the ink containing the specific tar pigment (Red No. 102) to the surface of the printing target. Specifically, the viscosity modifier contained in the inkjet ink according to this embodiment is the reduced isomaltulose. The solubility of the reduced isomaltulose in 100 ml of 20°C water is 38 g. When the viscosity modifier has the composition above, the ink containing the Red No. 102 can be sufficiently fixed to the surface of the printing target. This allows the inkjet ink according to this embodiment to sufficiently suppress the photodiscoloration and/or photofading of the printed images and enhance the lightfastness. Further, the reduced isomaltulose itself used as the viscosity modifier in this embodiment also has the function of suppressing the decomposition (photolysis) due to the irradiation with light of the inkjet ink. Therefore, the occurrence itself of the photodiscoloration and/or photofading can also be suppressed.

Further, the addition of the reduced isomaltulose as the viscosity modifier to the inkjet ink facilitates the viscosity modification of the inkjet ink and can enhance the discharge stability.

The compounding ratio of the reduced isomaltulose in the inkjet ink according to this embodiment, i.e., the content of the reduced isomaltulose, is preferably in the range of 3.0 mass% or more and 8.5 mass% or less based on the total mass of the ink. With such a composition, the ink fixing effect by the reduced isomaltulose can be more reliably exhibited and the lightfastness of the inkjet ink can be reliably enhanced. Further, high discharge stability can be imparted to the inkjet ink according to this embodiment.

In contrast thereto, when the compounding ratio of the reduced isomaltulose is less than 3.0 mass%, the ink fixing effect decreases and the lightfastness decreases in some cases. When the compounding ratio of the reduced isomaltulose is less than 3.0 mass%, the viscosity of the ink is not sufficient, and therefore discharged ink droplets sometimes do not land at the intended positions (i.e., landing accuracy of the ink droplets sometimes decreases). When the compounding ratio of the reduced isomaltulose exceeds 8.5 mass%, an increase in the ink viscosity or the precipitation of the reduced isomaltulose on the nozzle surface occurs, which can cause nozzle clogging of the inkjet head in printing, resulting in a decrease in the discharge stability.

The compounding ratio of the reduced isomaltulose is more preferably in the range of 4.0 mass% or more and 8.0 mass% or less based on the total mass of the ink and still more preferably in the range of 5.0 mass% or more and 8.0 mass% or less based on the total mass of the ink. With such a composition, the ink fixing effect by the reduced isomaltulose can be more reliably exhibited, and the lightfastness of the inkjet ink can be reliably enhanced. Further, higher discharge stability can be imparted to the inkjet ink according to this embodiment.

The viscosity of the inkjet ink according to this embodiment, i.e., the viscosity of the inkjet ink added with the reduced isomaltulose, which is the viscosity modifier, is preferably in the range of 1.0 mPa·s or more and 7.0 mPa·s or less. With such a composition, moderate viscosity can be imparted to the ink, and therefore discharged ink droplets can be caused to land at the intended positions (i.e., the landing accuracy of the ink droplets can be enhanced).

In contrast thereto, when the viscosity of the inkjet ink is less than 1.0 mPa·s, the viscosity of the ink is excessively low, and therefore discharged ink droplets sometimes are not landed at the intended positions (i.e., the landing accuracy of the ink droplets sometimes decreases). When the viscosity of the inkjet ink exceeds 7.0 mPa·s, the viscosity of the ink is excessively high, and therefore the ink droplets are sometimes difficult to discharge.

The viscosity of the inkjet ink is more preferably in the range of 2.0 mPa·s or more and 6.0 mPa·s or less, more preferably in the range of 2.0 mPa·s or more and 5.0 mPa·s or less, and most preferably in the range of 2.5 mPa·s or more and 3.5 mPa·s or less. With such a composition, the landing accuracy of the ink droplets can be further enhanced.

### (Viscosity measurement method)

The viscosity of the ink is measured at a measurement temperature of 25°C using a rotational viscometer, for example.

The viscosity of the ink in this embodiment is a value obtained by measurement at a measurement temperature of 25°C using a rotational viscometer.

A ratio of the mass of the reduced isomaltulose to the mass of the Red No. 102 (Reduced isomaltulose/Red No. 102) in the inkjet ink according to this embodiment is preferably in the range of 2.3 or more and 6.5 or less, more preferably in the range of 3.1 or more and 6.1 or less, and still more preferably in the range of 3.8 or more and 6.1 or less. With such a composition, the ink fixing effect by the reduced isomaltulose can be more reliably exhibited, and the lightfastness of the inkjet ink can be reliably enhanced. Further, high discharge stability can be imparted to the inkjet ink according to this embodiment.

In contrast thereto, when the ratio above (Reduced isomaltulose/Red No. 102) is less than 2.3, the ink fixing effect can decrease. When the ratio above (Reduced isomaltulose/Red No. 102) is less than 2.3, the lightfastness sometimes decreases or the lightfastness is sometimes not exhibited when printed tablets are stored. When the ratio above (Reduced isomaltulose/Red No. 102) is less than 2.3, the viscosity of the ink is not sufficient, and therefore discharged ink droplets sometimes are not landed at the intended positions (i.e., the landing accuracy of the ink droplets sometimes decreases).

When the ratio above (Reduced isomaltulose/Red No. 102) exceeds 6.5, an increase in ink viscosity or the precipitation of the reduced isomaltulose on the nozzle surface occurs, which can cause nozzle clogging of the inkjet head in printing, resulting in a decrease in the discharge stability.

As described above, by setting the addition amount of the reduced isomaltulose in the inkjet ink in the specific numerical ranges, both the lightfastness and the discharge stability can be improved.

Hereinafter, the mechanism related to the improvement of the discharge stability is described.

The reduced isomaltulose added to the inkjet ink forms a coating film at the ink interface of the nozzle surface provided in an inkjet device, such as an inkjet printer, and also has a function of preventing solvent evaporation. The coating film has the property of easily disintegrating and even redissolving in an ink discharge operation using a piezoelectric element provided in the inkjet device.

Therefore, the addition of the reduced isomaltulose to the inkjet ink suppresses the change in the physical properties of the ink near the nozzle surface of the inkjet device and enables stable discharge. As a result, the discharge stability increases in the inkjet ink added with the reduced isomaltulose.

### (Solvent)

The inkjet ink according to this embodiment contains, in addition to the above-described specific tar pigment (Red No. 102) and the above-described viscosity modifier (reduced isomaltulose), a solvent (dispersion medium) to dissolve (disperse) the specific tar pigment and the viscosity modifier. The inkjet ink according to this embodiment contains water (e.g., purified water), the monohydric alcohol which is at least one type among ethanol, normal propyl alcohol (NPA), and isopropyl alcohol (IPA), and the wetting agent which is at least one type of glycerol and propylene glycol (PG) as the solvent.

In general, the reduced isomaltulose has the property of hardly dissolving in alcohols. Therefore, in this embodiment, the solvent contains the monohydric alcohol which is at least one type among ethanol, normal propyl alcohol, and isopropyl alcohol and the wetting agent (polyhydric alcohol) which is at least one type of glycerol and propylene glycol, and therefore the solubility in the solvent of the reduced isomaltulose decreases. Thus, in the inkjet ink according to this embodiment, the ink fixing effect by the reduced isomaltulose is further enhanced, and the specific tar pigment (Red No. 102 in this example) contained in the ink can be allowed to remain at a higher density on the surface of the printing target (e.g., tablet). Accordingly, the lightfastness of the inkjet ink of this embodiment can be further enhanced.

The glycerol and the propylene glycol can function as the wetting agent to prevent the ink from drying at inkjet nozzles and impart sufficient discharge stability to the ink. The ethanol, the normal propyl alcohol, and the isopropyl alcohol have high volatility, and thus can enhance the transfer resistance (drying properties) of the inkjet ink. The addition of the alcohols described above to the solvent in addition to the water can further enhance the lightfastness of the inkjet ink and impart the performance corresponding to each component to the inkjet ink.

In the inkjet ink according to this embodiment, the compounding ratio of the monohydric alcohol described above, i.e., content of the monohydric alcohol, is in the range of 30 mass% or more and 60 mass% or less based on the total mass of the ink. With such a composition, excellent drying properties can be imparted to the ink. When the content of the monohydric alcohol is in the ranges above, moderate viscosity can be imparted to the ink, and therefore discharged ink droplets can be caused to land at the intended positions (i.e., the landing accuracy of the ink droplets can be enhanced).

In contrast thereto, when the content of the monohydric alcohol is less than 30 mass%, the drying properties of the ink tend to decrease.

When the content of the monohydric alcohol exceeds 60 mass%, the drying on the nozzle liquid level is accelerated and nozzles of the inkjet head are clogged in printing, and therefore the discharge stability can decrease.

The content of the monohydric alcohol is more preferably in the range of 35 mass% or more and 55 mass% or less and still more preferably in the range of 35 mass% or more and 50 mass% or less based on the total mass of the ink. With such a composition, the drying properties of the ink can be reliably maintained and excellent discharge stability can be imparted.

The compounding ratio of each component of the above-described solvent in the inkjet ink according to this embodiment is not limited. The compounding ratio of the wetting agent described above, i.e., the addition amount of the wetting agent, is in the range of 0.05 mass% or more and 10 mass% or less based on the total mass of the ink. With such a composition, the solubility of the reduced isomaltulose in the solvent reliably decreases, and the effect of fixing the ink containing the specific tar pigment is further enhanced. Therefore, more excellent lightfastness can be imparted to the inkjet ink. With the above-described composition, the drying of the nozzle liquid level can be prevented, and therefore the discharge stability can be enhanced.

Meanwhile, when the addition amount of the wetting agent is less than 0.05 mass%, the effect of reducing the solubility of the reduced isomaltulose in the solvent sometimes decrease, and the fixing effect decreases in some cases. When the addition amount of the wetting agent is less than 0.05 mass%, the drying of the nozzle liquid level is accelerated, and the discharge stability decreases in some cases.

When the addition amount of the wetting agent exceeds 10 mass%, the compounding ratio of the monohydric alcohol in the whole ink relatively decreases.
Therefore, the drying of the printed surface on the tablet surface is further delayed, causing a defect in which, when printed tablets are brought into contact with each other, undried ink adheres to other tablets and causes staining (poor transfer) in some cases.

The compounding ratio of the wetting agent, i.e., addition amount of the wetting agent, is preferably in the range of 0.05 mass% or more and 6 mass% or less and more preferably in the range of 0.05 mass% or more and 4 mass% or less based on the total mass of the ink. With such a composition, the drying properties of the ink are reliably maintained and excellent discharge stability can be imparted.

### (Internal-sizing resin)

The inkjet ink according to this embodiment may contain an internal-sizing resin in addition to the pigment and the solvent described above. The internal-sizing resin that can be added to the inkjet ink according to this embodiment may be an edible resin-like substance in the form of a water-soluble powder, a paste, or flakes capable of forming a coating film on the surface of a tablet when dried after printing. The internal-sizing resin includes polyvinyl alcohol (PVA), hydroxypropyl cellulose (HPC), hydroxypropyl methylcellulose (HPMC), polyvinylpyrrolidones (PVP), high molecular weight polyethylene glycol (PEG), such as polyethylene glycol 4000/polyethylene glycol 1540, shellac resin, a methacrylic acid copolymer (product name: Eudragit S100), maltodextrin, erythritol, and the like, for example.

### (Leveling agent)

The inkjet ink according to this embodiment may contain a leveling agent in addition to the pigment and the solvent or the internal-sizing resin described above. The leveling agent that can be added to the inkjet ink according to this embodiment may be an edible and water-soluble surfactant. The leveling agent includes polyglycerol fatty acid ester (e.g., Decaglycerol distearate Q-182S or Decaglycerol monolaurate Q-12S manufactured by Taiyo Kagaku Co., Ltd.), sorbitan fatty acid ester (e.g., NIKKOLSL-10 manufactured by Nikko Chemicals Co., Ltd.), sucrose fatty acid ester (e.g., DK Ester F-110 manufactured by DKS Co. Ltd.), polysorbate (Emazole S-120 series manufactured by Kao Corporation), and the like, for example.

### [Printing method]

The inkjet ink according to this embodiment is not particularly limited in a printing method, and is applicable to printing using an inkjet device, such as a commercially available inkjet printer. Therefore, the inkjet ink according to this embodiment has a wide range of applications and is very useful. For example, the inkjet ink according to this embodiment can be printed using a so-called drop-on-demand inkjet device including a piezoelectric element (piezoelectric ceramic) as an actuator or can be printed also using inkjet devices of other types.

The drop-on-demand inkjet device includes a device adopting a thermal-inkjet system of discharging an inkjet ink using steam pressure generated by instantaneously heating a micro-heating element to a high temperature (200 to 300°C), an electrostatic type device discharging an inkjet ink by electrostatically vibrating an actuator, a device adopting an ultrasonic system utilizing an ultrasonic cavitation phenomenon, and the like, for example. When the inkjet ink according to this embodiment has charging performance, a device adopting a continuous ejection system can also be utilized.

### [Tablet]

In this embodiment, the inkjet ink according to this embodiment may be used for printing characters or images on the surfaces of tablets, for example, using the printing methods described above. More specifically, the tablet according to this embodiment may include printed parts, i.e., printed images, printed using the inkjet ink according to this embodiment. Insofar as the inkjet ink according to this embodiment is used, the lightfastness of the printed images provided on the surfaces of medicine tablets using the inkjet printing methods can be enhanced. Hereinafter, the composition of the tablet including the printed images printed with the inkjet ink according to this embodiment is described.

The tablet according to this embodiment is, for example, a medicine tablet. Herein, the "medicine tablet" includes film-coated tablets having an outermost surface on which a water-soluble surface layer is formed besides uncoated tablets (bare tablets), sugarcoated tablets, enteric tablets, orally disintegrating tablets, and the like, for example.

FIG. 2 is a schematic cross-sectional view illustrating one example of a medicine tablet (uncoated tablet) provided with printing (characters or images). FIG. 2 illustrates uncoated tablet printed matter 5, in cross-sectional view, with printed images 3, such as characters, printed on the upper surface of the substrate 1 of the tablet.

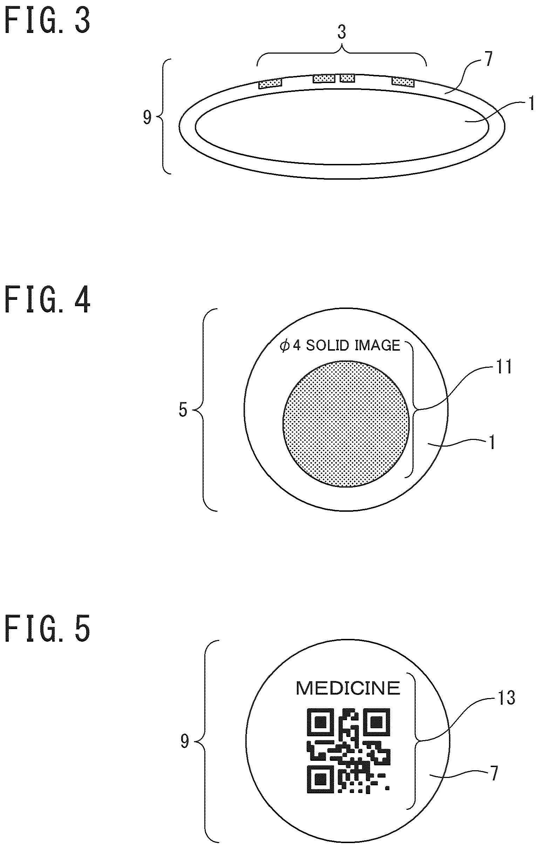

FIG. 3 is a schematic cross-sectional view illustrating one example of a medicine tablet (film-coated tablet) provided with printing (characters or images). FIG. 3 illustrates film-coated tablet printed matter 9, in cross-sectional view, with the printed images 3, such as characters, printed on the upper surface of the substrate 1 of the tablet, on the surface of which a film coating layer 7 is formed.

In this embodiment, a solid image may be printed as an uncoated tablet printed image 11 as illustrated in FIG. 4, or a two-dimensional barcode may be printed as a film-coated tablet printed image 13 as illustrated in FIG. 5.

The medicine tablet contains active ingredients without being particularly limited. The active ingredients include, but are not limited to, substances effective for preventing or treating various diseases (e.g., substances having a sleep-inducing effect, tranquilizer activity, antibacterial activity, antihypertensive effect, anti-angina activity, analgesic effect, anti-inflammatory activity, tranquilizing effect, diabetes treatment activity, diuretic effect, anticholinergic activity, anti-hyperacidity effect, antiepileptic effect, ACE inhibitory activity, β-receptor antagonist or agonist activity, anesthetic action, appetite suppressant action, antiarrhythmic effect, antidepressant effect, anticoagulant activity, antidiarrheal effect, antihistamine activity, antimalarial effect, antitumor activity, immunosuppressive activity, antiparkinsonian effect, antipsychotic effect, antiplatelet activity, antihyperlipidemic effect, and the like), substances having a cleaning effect, substances having a scent or a deodorant action, and the like, for example.

In the tablet according to this embodiment, carriers acceptable for the intended use can be compounded as required together with the active ingredients. For example, medicine tablets can be compounded with pharmaceutically acceptable carriers. As the pharmaceutically acceptable carriers, various organic or inorganic carrier substances, which are commonly used as formulation materials, are used. For example, an appropriate amount of excipients, lubricants, binders, disintegrants, thickeners, and the like are compounded as appropriate. Further, additives, such as antiseptics, antioxidants, coloring agents, and sweeteners, are also usable as required.

Although this embodiment is described taking the medicine tablet as an example of the tablet, the tablets are not limited to the tablets of the present invention. The printing targets of the inkjet ink according to this embodiment are not particularly restricted. For example, the inkjet ink according to this embodiment may be printed on the surfaces of various tablets, such as tablets to be administered to non-human animals (pets, livestock, poultry, and the like), or tablets of feed, fertilizers, cleaning agents, and food tablets, such as confectionery tablets, e.g., soda-pop candy, and supplement tablets. The inkjet ink according to this embodiment is not particularly restricted in the size of the printing target, and is applicable to tablets of various sizes.

### (Advantageous effects of this embodiment)

(1) The inkjet ink according to this embodiment contains: Red No. 102; reduced isomaltulose; and, as a solvent, water, monohydric alcohol, and a wetting agent, in which the monohydric alcohol includes at least one type among ethanol, NPA, and IPA, the wetting agent includes at least one type of glycerol and PG, the compounding ratio of the Red No. 102 is in the range of 0.5 mass% or more and 3.0 mass% or less based on the total mass of the inkjet ink, the compounding ratio of the monohydric alcohol is in the range of 30 mass% or more and 60 mass% or less based on the total mass of the inkjet ink, and the compounding ratio of the wetting agent is in the range of 0.05 mass% or more and 10 mass% or less based on the total mass of the inkjet ink.
   With such a composition, the inkjet ink can have drying properties, lightfastness, and discharge stability.
(2) The compounding amount of the reduced isomaltulose in the inkjet ink according to this embodiment may be in the range of 3.0 mass% or more and 8.5 mass% or less based on the total mass of the inkjet ink.
   With such a composition, the lightfastness and the discharge stability can be further enhanced.
(3) The inkjet ink according to this embodiment may have viscosity in the range of 1.0 mPa·s or more and 7.0 mPa·s or less.
   With such a composition, moderate viscosity can be imparted to the ink, and therefore discharged ink droplets can be caused to land at the intended positions (i.e., the landing accuracy of the ink droplets can be enhanced).
(4) The tablet according to this embodiment includes printed parts (one example of the printed parts) 3 printed with the inkjet ink described above.

With such a composition, the photodiscoloration and/or photofading in the printed image 3 or the like printed directly on the surface of the tablet or the like can be sufficiently suppressed, and the lightfastness of the printed image 3 can be sufficiently enhanced. Further, edibility can be imparted also to a printed image portion printed on the surface of the tablet.

### [EXAMPLES]

### <Example 1>

Hereinafter, a procedure of preparing an inkjet ink according to Example 1 is described.

### (Production of inkjet ink)

First, a printing ink was prepared. An inkjet ink contains components, such as a pigment (colorant), a solvent, a wetting agent, and a viscosity modifier (reduced isomaltulose). As the preparation procedure, first, the wetting agent and the viscosity modifier (reduced isomaltulose) were added to the solvent to give a transparent base liquid. Subsequently, a pigment was added to the transparent base liquid. Thus, an ink according to this example was prepared. Hereinafter, the individual components are specifically described.

In Examples 1 to 30 and Comparative Examples 1 to 12, purified water (ion-exchanged water), ethanol, normal propyl alcohol (NPA: 1-propanol), and isopropyl alcohol (IPA: 2-propanol) were individually used as required for the solvent.

In Examples 1 to 30 and Comparative Examples 1 to 12, glycerol and PG (propylene glycol) were individually used as required as the wetting agent.

In this example, at least one type among ethanol, NPA, and IPA and at least one type of glycerol and PG were added to the purified water and thoroughly stirred to give a solvent (mixed solvent). Reduced isomaltulose was added as the viscosity modifier to the solvent above, and the resultant mixture was stirred for about 1 hour to give a transparent base liquid. Red No. 102, Red No. 3, Yellow No. 4, and Blue No. 1, which are the food dyes, were added as the colorant to the transparent base liquid above to give an inkjet ink of Example 1. Based on the total inkjet ink of Example 1, the compounding ratio of the Red No. 102, which is the colorant, was set to 0.50 mass%, the compounding ratio of the Red No. 3, which is the colorant, was set to 0.03 mass%, the compounding ratio of the Yellow No. 4, which is the colorant, was set to 0.03 mass%, the compounding ratio of the Blue No. 1, which is the colorant, was set to 0.03 mass%, the compounding ratio of the purified water among the solvents was set to 52.96 mass%, the compounding ratio of the ethanol among the solvents was set to 40.0 mass%, the compounding ratio of the propylene glycol (PG) among the solvents was set to 0.1 mass%, and the compounding ratio of the reduced isomaltulose, which is the viscosity modifier, was set to 6.35 mass%.

Thus, a mass ratio between the reduced isomaltulose and the Red No. 102 (Mass of reduced isomaltulose/Mass of Red No. 102) in the inkjet ink of Example 1 was adjusted to 12.7.

### <Example 2>

In this example, based on the total inkjet ink, the compounding ratio of the Red No. 102 was set to 1.0 mass%, the compounding ratio of the Red No. 3 was set to 0.06 mass%, the compounding ratio of the Yellow No. 4 was set to 0.06 mass%, the compounding ratio of the Blue No. 1 was set to 0.06 mass%, and the compounding ratio of the purified water was set to 52.37 mass%. An inkjet ink of Example 2 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 2 was adjusted to 6.4.

### <Example 3>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, and the compounding ratio of the purified water was set to 52.00 mass%. An inkjet ink of Example 3 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 3 was adjusted to 4.8.

### <Example 4>

In this example, based on the total inkjet ink, the compounding ratio of the Red No. 102 was set to 1.60 mass%, the compounding ratio of the Red No. 3 was set to 0.10 mass%, the compounding ratio of the Yellow No. 4 was set to 0.10 mass%, the compounding ratio of the Blue No. 1 was set to 0.10 mass%, and the compounding ratio of the purified water was set to 51.65 mass%. An inkjet ink of Example 4 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 4 was adjusted to 4.0.

### <Example 5>

In this example, based on the total inkjet ink, the compounding ratio of the Red No. 102 was set to 2.50 mass%, the compounding ratio of the Red No. 3 was set to 0.15 mass%, the compounding ratio of the Yellow No. 4 was set to 0.15 mass%, the compounding ratio of the Blue No. 1 was set to 0.15 mass%, and the compounding ratio of the purified water was set to 50.60 mass%. An inkjet ink of Example 5 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 5 was adjusted to 2.5.

### <Example 6>

In this example, based on the total inkjet ink, the compounding ratio of the Red No. 102 was set to 3.00 mass%, the compounding ratio of the Red No. 3 was set to 0.18 mass%, the compounding ratio of the Yellow No. 4 was set to 0.18 mass%, the compounding ratio of the Blue No. 1 was set to 0.18 mass%, and the compounding ratio of the purified water was set to 50.01 mass%. An inkjet ink of Example 6 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 6 was adjusted to 2.1.

### <Example 7>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 62.00 mass%, and the compounding ratio of the ethanol was set to 30.0 mass%. An inkjet ink of Example 7 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 7 was adjusted to 4.8.

### <Example 8>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 57.00 mass%, and the compounding ratio of the ethanol was set to 35.0 mass%. An inkjet ink of Example 8 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 8 was adjusted to 4.8.

### <Example 9>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 42.00 mass%, and the compounding ratio of the ethanol was set to 50.0 mass%. An inkjet ink of Example 9 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 9 was adjusted to 4.8.

### <Example 10>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 37.00 mass%, and the compounding ratio of the ethanol was set to 55.0 mass%. An inkjet ink of Example 10 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 10 was adjusted to 4.8.

### <Example 11>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 32.00 mass%, and the compounding ratio of the ethanol was set to 60.0 mass%. An inkjet ink of Example 11 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 11 was adjusted to 4.8.

### <Example 12>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 52.00 mass%, and the compounding ratio of the NPA in place of the ethanol was set to 40.0 mass%. An inkjet ink of Example 12 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 12 was adjusted to 4.8.

### <Example 13>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 52.00 mass%, and the compounding ratio of the IPA in place of the ethanol was set to 40.0 mass%. An inkjet ink of Example 13 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 13 was adjusted to 4.8.

### <Example 14>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 52.00 mass%, the compounding ratio of the ethanol was set to 35.0 mass%, and the compounding ratio of the NPA was set to 5.0 mass%. An inkjet ink of Example 14 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 14 was adjusted to 4.8.

### <Example 15>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 52.00 mass%, the compounding ratio of the ethanol was set to 35.0 mass%, and the compounding ratio of the IPA was set to 5.0 mass%. An inkjet ink of Example 15 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 15 was adjusted to 4.8.

### <Example 16>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 52.05 mass%, and the compounding ratio of the PG was set to 0.05 mass%. An inkjet ink of Example 16 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 16 was adjusted to 4.8.

### <Example 17>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 48.10 mass%, and the compounding ratio of the PG was set to 4.00 mass%. An inkjet ink of Example 17 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 17 was adjusted to 4.8.

### <Example 18>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 46.10 mass%, and the compounding ratio of the PG was set to 6.00 mass%. An inkjet ink of Example 18 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 18 was adjusted to 4.8.

### <Example 19>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 42.10 mass%, and the compounding ratio of the PG was set to 10.00 mass%. An inkjet ink of Example 19 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 19 was adjusted to 4.8.

### <Example 20>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 52.00 mass%, and the compounding ratio of the glycerol in place of the PG was set to 0.10 mass%. An inkjet ink of Example 20 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 20 was adjusted to 4.8.

### <Example 21>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 55.85 mass%, and the compounding ratio of the reduced isomaltulose was set to 2.50 mass%. An inkjet ink of Example 21 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 21 was adjusted to 1.9.

### <Example 22>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 55.35 mass%, and the compounding ratio of the reduced isomaltulose was set to 3.00 mass%. An inkjet ink of Example 22 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 22 was adjusted to 2.3.

### <Example 23>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 54.35 mass%, and the compounding ratio of the reduced isomaltulose was set to 4.00 mass%. An inkjet ink of Example 23 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 23 was adjusted to 3.1.

### <Example 24>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 53.35 mass%, and the compounding ratio of the reduced isomaltulose was set to 5.00 mass%. An inkjet ink of Example 24 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 24 was adjusted to 3.8.

### <Example 25>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 51.35 mass%, and the compounding ratio of the reduced isomaltulose was set to 7.00 mass%. An inkjet ink of Example 25 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 25 was adjusted to 5.3.

### <Example 26>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 50.35 mass%, and the compounding ratio of the reduced isomaltulose was set to 8.00 mass%. An inkjet ink of Example 26 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 26 was adjusted to 6.1.

### <Example 27>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 49.85 mass%, and the compounding ratio of the reduced isomaltulose was set to 8.50 mass%. An inkjet ink of Example 27 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 27 was adjusted to 6.5.

### <Example 28>

In this example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 40.35 mass%, and the compounding ratio of the reduced isomaltulose was set to 18.00 mass%. An inkjet ink of Example 28 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 28 was adjusted to 13.7.

### <Example 29>

In this example, based on the total inkjet ink, the compounding ratio of the Red No. 102 was set to 3.00 mass%, the compounding ratio of the Red No. 3 was set to 0.18 mass%, the compounding ratio of the Yellow No. 4 was set to 0.18 mass%, the compounding ratio of the Blue No. 1 was set to 0.18 mass%, the compounding ratio of the purified water was set to 27.86 mass%, the compounding ratio of the ethanol was set to 60.00 mass%, and the compounding ratio of the reduced isomaltulose was set to 8.50 mass%. An inkjet ink of Example 29 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 29 was adjusted to 2.8.

### <Example 30>

In this example, based on the total inkjet ink, the compounding ratio of the Red No. 102 was set to 0.50 mass%, the compounding ratio of the Red No. 3 was set to 0.03 mass%, the compounding ratio of the Yellow No. 4 was set to 0.03 mass%, the compounding ratio of the Blue No. 1 was set to 0.03 mass%, the compounding ratio of the purified water was set to 56.41 mass%, the compounding ratio of the ethanol was set to 30.00 mass%, the compounding ratio of the PG was set to 10.00 mass%, and the compounding ratio of the reduced isomaltulose was set to 3.00 mass%. An inkjet ink of Example 30 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 30 was adjusted to 6.0.

### <Example 31>

In this example, based on the total inkjet ink, the compounding ratio of the Red No. 102 was set to 0.50 mass% and the compounding ratio of the purified water was set to 53.05 mass%. An inkjet ink of Example 31 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 31 was adjusted to 12.7.

### <Example 32>

In this example, based on the total inkjet ink, the compounding ratio of the Red No. 102 was set to 1.00 mass% and the compounding ratio of the purified water was set to 52.55 mass%. An inkjet ink of Example 32 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 32 was adjusted to 6.4.

### <Example 33>

In this example, based on the total inkjet ink, the compounding ratio of the Red No. 102 was set to 1.31 mass% and the compounding ratio of the purified water was set to 52.24 mass%. An inkjet ink of Example 33 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 33 was adjusted to 4.8.

### <Example 34>

In this example, based on the total inkjet ink, the compounding ratio of the Red No. 102 was set to 1.60 mass% and the compounding ratio of the purified water was set to 51.95 mass%. An inkjet ink of Example 34 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 34 was adjusted to 4.0.

### <Example 35>

In this example, based on the total inkjet ink, the compounding ratio of the Red No. 102 was set to 2.50 mass% and the compounding ratio of the purified water was set to 51.05 mass%. An inkjet ink of Example 35 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 35 was adjusted to 2.5.

### <Example 36>

In this example, based on the total inkjet ink, the compounding ratio of the Red No. 102 was set to 3.00 mass% and the compounding ratio of the purified water was set to 50.55 mass%. An inkjet ink of Example 36 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 36 was adjusted to 2.1.

### <Example 37>

In this example, based on the total inkjet ink, the compounding ratio of the Red No. 102 was set to 1.31 mass%, the compounding ratio of the purified water was set to 57.24 mass%, and the compounding ratio of the ethanol was set to 35.00 mass%. An inkjet ink of Example 37 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 37 was adjusted to 4.8.

### <Example 38>

In this example, based on the total inkjet ink, the compounding ratio of the Red No. 102 was set to 1.31 mass%, the compounding ratio of the purified water was set to 42.24 mass%, and the compounding ratio of the ethanol was set to 50.00 mass%. An inkjet ink of Example 38 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 38 was adjusted to 4.8.

### <Example 39>

In this example, based on the total inkjet ink, the compounding ratio of the Red No. 102 was set to 1.31 mass%, the compounding ratio of the purified water was set to 52.29 mass%, and the compounding ratio of the PG was set to 0.05 mass%. An inkjet ink of Example 39 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 39 was adjusted to 4.8.

### <Example 40>

In this example, based on the total inkjet ink, the compounding ratio of the Red No. 102 was set to 1.31 mass%, the compounding ratio of the purified water was set to 48.34 mass%, and the compounding ratio of the PG was set to 4.00 mass%. An inkjet ink of Example 40 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 40 was adjusted to 4.8.

### <Example 41>

In this example, based on the total inkjet ink, the compounding ratio of the Red No. 102 was set to 1.31 mass%, the compounding ratio of the purified water was set to 53.59 mass%, and the compounding ratio of the reduced isomaltulose was set to 5.00 mass%. An inkjet ink of Example 41 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 41 was adjusted to 3.8.

### <Example 42>

In this example, based on the total inkjet ink, the compounding ratio of the Red No. 102 was set to 1.31 mass%, the compounding ratio of the purified water was set to 50.59 mass%, and the compounding ratio of the reduced isomaltulose was set to 8.00 mass%. An inkjet ink of Example 42 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 42 was adjusted to 6.1.

### <Example 43>

In this example, based on the total inkjet ink, the compounding ratio of the Red No. 102 was set to 1.31 mass%, the compounding ratio of the purified water was set to 56.09 mass%, and the compounding ratio of the reduced isomaltulose was set to 2.50 mass%. An inkjet ink of Example 43 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 43 was adjusted to 1.9.

### <Example 44>

In this example, based on the total inkjet ink, the compounding ratio of the Red No. 102 was set to 1.31 mass%, the compounding ratio of the purified water was set to 55.59 mass%, and the compounding ratio of the reduced isomaltulose was set to 3.00 mass%. An inkjet ink of Example 44 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 44 was adjusted to 2.3.

### <Example 45>

In this example, based on the total inkjet ink, the compounding ratio of the Red No. 102 was set to 1.31 mass%, the compounding ratio of the purified water was set to 50.09 mass%, and the compounding ratio of the reduced isomaltulose was set to 8.50 mass%. An inkjet ink of Example 45 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 45 was adjusted to 6.5.

### <Example 46>

In this example, based on the total inkjet ink, the compounding ratio of the Red No. 102 was set to 1.31 mass%, the compounding ratio of the purified water was set to 48.59 mass%, and the compounding ratio of the reduced isomaltulose was set to 10.00 mass%. An inkjet ink of Example 46 was obtained in the same manner as in Example 1, except for the above.

Thus, the mass ratio between the reduced isomaltulose and the Red No. 102 (Mass of reduced isomaltulose/Mass of Red No. 102) in the inkjet ink of Example 46 was adjusted to 7.6.

### <Comparative Example 1>

In this comparative example, based on the total inkjet ink, the compounding ratio of the Red No. 102 was set to 0.30 mass%, the compounding ratio of the Red No. 3 was set to 0.02 mass%, the compounding ratio of the Yellow No. 4 was set to 0.02 mass%, the compounding ratio of the Blue No. 1 was set to 0.02 mass%, and the compounding ratio of the purified water was set to 53.19 mass%. An inkjet ink of Comparative Example 1 was obtained in the same manner as in Example 1, except for the above.

Thus, the mass ratio between the reduced isomaltulose and the Red No. 102 (Mass of reduced isomaltulose/Mass of Red No. 102) in the inkjet ink of Comparative Example 1 was adjusted to 21.2.

### <Comparative Example 2>

In this comparative example, based on the total inkjet ink, the compounding ratio of the Red No. 102 was set to 5.00 mass%, the compounding ratio of the Red No. 3 was set to 0.31 mass%, the compounding ratio of the Yellow No. 4 was set to 0.31 mass%, the compounding ratio of the Blue No. 1 was set to 0.31 mass%, and the compounding ratio of the purified water was set to 47.62 mass%. An inkjet ink of Comparative Example 2 was obtained in the same manner as in Example 1, except for the above.

Thus, the mass ratio between the reduced isomaltulose and the Red No. 102 (Mass of reduced isomaltulose/Mass of Red No. 102) in the inkjet ink of Comparative Example 2 was adjusted to 1.3.

### <Comparative Example 3>

In this comparative example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 67.00 mass%, and the compounding ratio of the ethanol was set to 25.00 mass%. An inkjet ink of Comparative Example 3 was obtained in the same manner as in Example 1, except for the above.

Thus, the mass ratio between the reduced isomaltulose and the Red No. 102 (Mass of reduced isomaltulose/Mass of Red No. 102) in the inkjet ink of Comparative Example 3 was adjusted to 4.8.

### <Comparative Example 4>

In this comparative example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 27.00 mass%, and the compounding ratio of the ethanol was set to 65.00 mass%. An inkjet ink of Comparative Example 4 was obtained in the same manner as in Example 1, except for the above.

Thus, the mass ratio between the reduced isomaltulose and the Red No. 102 (Mass of reduced isomaltulose/Mass of Red No. 102) in the inkjet ink of Comparative Example 4 was adjusted to 4.8.

### <Comparative Example 5>

In this comparative example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 52.09 mass%, the compounding ratio of the ethanol was set to 40.00 mass%, and the compounding ratio of the PG was set to 0.01 mass%. An inkjet ink of Comparative Example 5 was obtained in the same manner as in Example 1, except for the above.

Thus, the mass ratio between the reduced isomaltulose and the Red No. 102 (Mass of reduced isomaltulose/Mass of Red No. 102) in the inkjet ink of Comparative Example 5 was adjusted to 4.8.

### <Comparative Example 6>

In this comparative example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 37.10 mass%, and the compounding ratio of the PG was set to 15.00 mass%. An inkjet ink of Comparative Example 6 was obtained in the same manner as in Example 1, except for the above.

Thus, the mass ratio between the reduced isomaltulose and the Red No. 102 (Mass of reduced isomaltulose/Mass of Red No. 102) in the inkjet ink of Comparative Example 6 was adjusted to 4.8.

### <Comparative Example 7>

In this comparative example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 52.00 mass%, and the compounding ratio of cellobiose in place of the reduced isomaltulose was set to 6.35 mass%. An inkjet ink of Comparative Example 7 was obtained in the same manner as in Example 1, except for the above.

Thus, the mass ratio between the reduced isomaltulose and the Red No. 102 (Mass of reduced isomaltulose/Mass of Red No. 102) in the inkjet ink of Comparative Example 7 was adjusted to 0.0.

### <Comparative Example 8>

In this comparative example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 52.00 mass%, and the compounding ratio of galactose in place of the reduced isomaltulose was set to 6.35 mass%. An inkjet ink of Comparative Example 8 was obtained in the same manner as in Example 1, except for the above.

Thus, the mass ratio between the reduced isomaltulose and the Red No. 102 (Mass of reduced isomaltulose/Mass of Red No. 102) in the inkjet ink of Comparative Example 8 was adjusted to 0.0.

### <Comparative Example 9>

In this comparative example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 54.35 mass%, and the compounding ratio of gum arabic in place of the reduced isomaltulose was set to 4.00 mass%. An inkjet ink of Comparative Example 9 was obtained in the same manner as in Example 1, except for the above.

Thus, the mass ratio between the reduced isomaltulose and the Red No. 102 (Mass of reduced isomaltulose/Mass of Red No. 102) in the inkjet ink of Comparative Example 9 was adjusted to 0.0.

### <Comparative Example 10>

In this comparative example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 57.85 mass%, and the compounding ratio of sodium alginate in place of the reduced isomaltulose was set to 0.50 mass%. An inkjet ink of Comparative Example 10 was obtained in the same manner as in Example 1, except for the above.

Thus, the mass ratio between the reduced isomaltulose and the Red No. 102 (Mass of reduced isomaltulose/Mass of Red No. 102) in the inkjet ink of Comparative Example 10 was adjusted to 0.0.

### <Comparative Example 11>

In this comparative example, based on the total inkjet ink, the compounding ratio of the Red No. 102 was set to 1.31 mass%, the compounding ratio of the Red No. 3 was set to 0.08 mass%, the compounding ratio of the Yellow No. 4 was set to 0.08 mass%, the compounding ratio of the Blue No. 1 was set to 0.08 mass%, the compounding ratio of the purified water was set to 57.85 mass%, and the compounding ratio of hydroxypropyl methylcellulose in place of the reduced isomaltulose was set to 0.50 mass%. An inkjet ink of Comparative Example 11 was obtained in the same manner as in Example 1, except for the above.

Thus, the mass ratio between the reduced isomaltulose and the Red No. 102 (Mass of reduced isomaltulose/Mass of Red No. 102) in the inkjet ink of Comparative Example 11 was adjusted to 0.0.

### <Comparative Example 12>

In this comparative example, based on the total inkjet ink, the compounding ratio of the Red No. 102 was set to 6.00 mass%, the compounding ratio of the Red No. 3 was set to 0.37 mass%, the compounding ratio of the Yellow No. 4 was set to 0.37 mass%, the compounding ratio of the Blue No. 1 was set to 0.37 mass%, the compounding ratio of the purified water was set to 68.39 mass%, the compounding ratio of polyethylene glycol in place of the PG was set to 7.50 mass%, the compounding ratio of polyglycerol fatty acid esters in place of the PG was set to 2.00 mass%, and the compounding ratio of the reduced isomaltulose was set to 15.00 mass%. An inkjet ink of Comparative Example 12 was obtained in the same manner as in Example 1, except for the above. In this comparative example, no ethanol was added.

Thus, the mass ratio between the reduced isomaltulose and the Red No. 102 (Mass of reduced isomaltulose/Mass of Red No. 102) in the inkjet ink of Comparative Example 12 was adjusted to 2.5.

### <Comparative Example 13>

In this comparative example, based on the total inkjet ink, the compounding ratio of the Red No. 102 was set to 0.30 mass% and the compounding ratio of the purified water was set to 53.25 mass%. An inkjet ink of Comparative Example 13 was obtained in the same manner as in Example 1, except for the above. In this comparative example, no colorants other than the Red No. 102 were added.

Thus, the mass ratio between the reduced isomaltulose and the Red No. 102 (Mass of reduced isomaltulose/Mass of Red No. 102) in the inkjet ink of Comparative Example 13 was adjusted to 21.2.

### <Comparative Example 14>

In this comparative example, based on the total inkjet ink, the compounding ratio of the Red No. 102 was set to 5.00 mass% and the compounding ratio of the purified water was set to 48.55 mass%. An inkjet ink of Comparative Example 14 was obtained in the same manner as in Example 1, except for the above. In this comparative example, no colorants other than the Red No. 102 were added.

Thus, the mass ratio between the reduced isomaltulose and the Red No. 102 (Mass of reduced isomaltulose/Mass of Red No. 102) in the inkjet ink of Comparative Example 14 was adjusted to 1.3.

Each of the above-described inks of Examples 1 to 46 and Comparative Examples 1 to 14 was passed through a membrane filter to remove solid foreign matter in the liquid. Specifically, each of the inks was passed once through a membrane filter (cellulose acetate film) having a pore size of 5.0 um, and subsequently, was passed once through a membrane filter (cellulose acetate film) having a pore size of 0.8 um to give a purified ink.

### <Evaluation>

The ink of each of Examples and Comparative Examples described above was evaluated for the solubility, the viscosity, the readability, the initial dischargeability, the fine line reproducibility, the intermittent resumability, the tablet drying properties, and the lightfastness by the following methods. The evaluation results are shown in Tables 1 to 4. In Tables 1 to 4, a "blank" portion indicates that the substance was not used. The sodium alginate used as the viscosity modifier in Comparative Example 10 had low solubility in the solvent used in Comparative Example 10. Therefore, the viscosity, the readability, the initial dischargeability, the fine line reproducibility, the intermittent resumability, the tablet drying properties, and the lightfastness of the ink of Comparative Example 10 were not able to be evaluated and are marked with "-" in Table 4.

### (Solubility test)

Dyes (colorants) and various additives were added to a solvent, followed by stirring for 1 hour under normal temperature and normal humidity. Samples in which solutes, such as the dyes, were dissolved were stored for 1 week under low temperature conditions (5°C or less), and then the solubility of each solute was verified.
Good: The solutes were all dissolved after 1 hour of stirring under normal temperature and normal humidity and no precipitates were generated when the sample was stored at low temperatures (5°C or less).
Average: The solutes were all dissolved after 1 hour of stirring under normal temperature and normal humidity and a precipitate was generated when the sample was stored at low temperatures (5°C or less).
Poor: Some of the solutes were not dissolved even after 1 hour of stirring under normal temperature and normal humidity.

When the evaluation in the solubility test was "Good" or "Average", the inks were used without any problem, and therefore evaluated as "Pass".

### (Viscosity measurement)

The viscosity of the ink of each of Examples and Comparative Examples was measured using a rotational viscometer at a measurement temperature of 25°C.
Excellent: 2.5 mPa·s ≤ Viscosity ≤ 3.5 mPa·s
Good: 2.0 mPa·s ≤ Viscosity < 2.5 mPa·s
Good: 3.5 mPa·s < Viscosity ≤ 5.0 mPa·s
Average: 5.0 mPa·s < Viscosity ≤ 6.0 mPa·s
Average-: 1.0 mPa·s ≤ Viscosity < 2.0 mPa·s
Average-: 6.0 mPa·s < Viscosity ≤ 7.0 mPa·s
Poor: Viscosity < 1.0 mPa·s
Poor: 7.0 mPa·s < Viscosity

When the evaluation in the solubility test was "Excellent", "Good", "Average", or "Average-", the inks were used without any problem, and therefore evaluated as "Pass".

### (Readability)

The readability was evaluated based on the optical density (OD value). The evaluation criteria of the readability are as follows.
Excellent: 0.3 < OD
Good: 0.2 < OD ≤ 0.3
Average: 0.15 < OD ≤ 0.2
Poor: OD ≤ 0.15

When the readability was evaluated as "Excellent", "Good", or "Average", the inks were used without any problem, and therefore evaluated as "Pass".

### (Initial discharge)

A piezoelectric ceramic-driven drop-on-demand inkjet head having a print resolution of 600 dpi in the main scanning direction and 600 dpi in the sub-scanning direction (conveyance direction of the recording medium, such as a tablet) and having 1,280 nozzles in total was used for the inkjet head. Immediately after nozzle maintenance was carried out, a test pattern was printed using the inkjet head. Then, from the printing status of the test pattern, the readability of printed characters or images in connection with the occurrence of a discharge failure region was confirmed. The evaluation criteria are as follows.
Excellent: No discharge failure
Good: Readable
Poor: Unreadable

When the initial dischargeability was evaluated as "Excellent" or "Good", the inks were used without any problem, and therefore evaluated as "Pass".

### (Fine line reproducibility)

A piezoelectric ceramic-driven drop-on-demand inkjet head having a print resolution of 600 dpi in the main scanning direction and 600 dpi in the sub-scanning direction (conveyance direction of the recording medium, such as a tablet) and having 1,280 nozzles in total was used for the inkjet head. Immediately after nozzle maintenance was carried out, a test pattern was printed using the inkjet head. Then, from the printing status of the test pattern, the reproducibility of one-dot-fine-line printed characters or images was confirmed. The evaluation criteria are as follows.
Good: The printed characters or images were reproduced in conformity with the print image.
Average: The printed characters or images were partially displaced from the print image.
Poor: The printed characters or images were entirely displaced from the print image.

When the fine line reproducibility was evaluated as "Good" or "Average", the inks were used without any problem, and therefore evaluated as "Pass".

### (Intermittent resumability (discharge stability) test)

Using a piezoelectric ceramic-driven drop-on-demand inkjet head having a print resolution of 600 dpi in the main scanning direction and 600 dpi in the sub-scanning direction (conveyance direction of the recording medium, such as a tablet) and having 1,280 nozzles in total, the inkjet head being left to stand for a specified period of time (15 min to 60 min) without flushing, a test pattern was printed using the ink at a printing drop quantity of 6 pl per drop, and it was confirmed that the ink was able to be discharged from all the nozzles with no non-discharge amount. In Tables 1 to 4 below, a standing time after which the ink was able to be discharged was measured as the intermittent printability (intermittent resumability-discharge stability) evaluation result. The evaluation criteria are as follows.
Excellent: 30 min or more and less than 60 min
Good: 15 min or more and less than 30 min
Average: 5 min or more and less than 15 min
Poor: Less than 5 min

When the intermittent resumability (discharge stability) test was evaluated as "Excellent", "Good", or "Average", the inks were used without any problem, and therefore evaluated as "Pass".

### (Tablet drying properties (transfer resistance) test)

Using a piezoelectric ceramic-driven drop-on-demand inkjet head having a print resolution of 600 dpi in the main scanning direction and 600 dpi in the sub-scanning direction (conveyance direction of the recording medium, such as a tablet) and having 1,280 nozzles in total, an image was printed using each of the inkjet inks of Examples and Comparative Examples at a printing drop quantity of 10 pl per drop.

10 seconds after the printing, white copying paper pasted on a digital force gauge was brought into contact with the tablet subjected to the printing for 0.4 to 0.5 seconds at a pressure of 4 to 5 N, and then it was confirmed that the printed ink was not transferred. In Tables 1 to 4, the density of the transferred ink was visually observed as the evaluation result of the transfer resistance (drying properties). The evaluation criteria are as follows.
Excellent: No inkjet ink transfer occurred.
Good: The inkjet ink was slightly transferred but difficult to visually recognize.
Poor: The inkjet ink was densely transferred.

When the tablet drying properties (transfer resistance) were evaluated as "Excellent" or "Good", the inkjet inks were used without any problem, and therefore evaluated as "Pass".

### (Lightfastness test)

Using a piezoelectric ceramic-driven drop-on-demand inkjet head having a print resolution of 600 dpi in the main scanning direction and 600 dpi in the sub-scanning direction (conveyance direction of a recording medium, such as a tablet) and having 1,280 nozzles in total, an image was printed on the following tablet using the purified inks of Examples 1 to 46 and Comparative Examples 1 to 14 at a printing drop quantity of 6 pl per drop. The purified inks of Examples 1 to 46 and Comparative Examples 1 to 14 described above were used (printed) in a normal humidity environment (60%RH), and the lightfastness test was performed in a normal humidity environment (50%RH).

The tablet as the printing target was a film-coated tablet for test (Base: conditioned starch, Coating agent: mixture of 70% hydroxypropyl methylcellulose and 30% titanium oxide, Diameter: 6.5 mm). The printed image was a circular solid image (Diameter: 4.0 mm). Thus, film-coated tablet printed matter was obtained.

Using a photostability tester (LT-120A-WD, Nagano Science), a cumulative 1.2 million lux of visible light was emitted to the film-coated tablet printed matter of Examples and Comparative Examples of which the chromaticity and the optical color density were measured. The chromaticity and the optical color density were measured using a spectrophotometer for the film-coated tablet printed matter irradiated with the visible light, and a comparison was made between the color differences ΔE (according to JIS Z 8781) indicating the change in the chromaticity and the optical color density before and after the irradiation with the visible light. The comparison results are shown in Tables 1 to 4. As described above, with respect to the change in the color tone before and after the irradiation with the visible light, the present inventors have derived the fact that, when the color difference ΔE according to JIS Z 8781 was 20 or less (ΔE ≤ 20), the photodiscoloration and/or photofading was sufficiently suppressed, and the inkjet ink had excellent lightfastness. Thus, assuming that, when ΔE ≤ 20 was satisfied, the inkjet inks had excellent lightfastness, and the inkjet inks were evaluated as "Pass" in this evaluation. When ΔE ≤ 13 was satisfied, the inkjet inks had very excellent lightfastness, and the inkjet inks were regarded as more excellent inkjet inks in this evaluation.
Excellent: ΔE ≤ 13
Good: 13 < ΔE ≤ 15
Average: 15 < ΔE ≤ 20
Poor: 20 < ΔE

When the lightfastness test was evaluated as "Excellent", "Good", or "Average", the inkjet inks were used without any problem, and therefore evaluated as "Pass".

**[Table 1]**

| | | | Examples | | | | | | | | | | | | | | |
|---|---|---|---|---|---|---|---|---|---|---|---|---|---|---|---|---|---|
| | | | #1 | #2 | #3 | #4 | #5 | #6 | #7 | #8 | #9 | #10 | #11 | #12 | #13 | #14 | #15 |
| | Colorant | Red No. 102 | 0.50% | 1.00% | 1.31% | 1.60% | 2.50% | 3.00% | 1.31% | 1.31% | 1.31% | 1.31% | 1.31% | 1.31% | 1.31% | 1.31% | 1.31% |
| | | Red No. 3 | 0.03% | 0.06% | 0.08% | 0.10% | 0.15% | 0.18% | 0.08% | 0.08% | 0.08% | 0.08% | 0.08% | 0.08% | 0.08% | 0.08% | 0.08% |
| | | Yello No. 4 | 0.03% | 0.06% | 0.08% | 0.10% | 0.15% | 0.18% | 0.08% | 0.08% | 0.08% | 0.08% | 0.08% | 0.08% | 0.08% | 0.08% | 0.08% |
| | | Blue No. 1 | 0.03% | 0.06% | 0.08% | 0.10% | 0.15% | 0.18% | 0.08% | 0.08% | 0.08% | 0.08% | 0.08% | 0.08% | 0.08% | 0.08% | 0.08% |
| | Solvent | Water | 52.96% | 52.37% | 52.00% | 51.65% | 50.60% | 50.01% | 62.00% | 57.00% | 42.00% | 37.00% | 32.00% | 52.00% | 52.00% | 52.00% | 52.00% |
| | | Ethanol | 40.00% | 40.00% | 40.00% | 40.00% | 40.00% | 40.00% | 30.00% | 35.00% | 50.00% | 55.00% | 60.00% | | | 35.00% | 35.00% |
| Formula | | NPA | | | | | | | | | | | | 40.00% | | 5.00% | |
| | | IPA | | | | | | | | | | | | | 40.00% | | 5.00% |
| | Wetting agent | PG | 0.10% | 0.10% | 0.10% | 0.10% | 0.10% | 0.10% | 0.10% | 0.10% | 0.10% | 0.10% | 0.10% | 0.10% | 0.10% | 0.10% | 0.10% |
| | | Glycerol | | | | | | | | | | | | | | | |
| | Viscosity modifier | Reduced isomaltulose | 6.35% | 6.35% | 6.35% | 6.35% | 6.35% | 6.35% | 6.35% | 6.35% | 6.35% | 6.35% | 6.35% | 6.35% | 6.35% | 6.35% | 6.35% |
| | Total | | 100.00% | 100.00% | 100.00% | 100.00% | 100.00% | 100.00% | 100.00% | 100.00% | 100.00% | 100.00% | 100.00% | 100.00% | 100.00% | 100.00% | 100.00% |
| | Reduced isomaltulose/Red No. 102 | | 12.7 | 6.4 | 4.8 | 4.0 | 2.5 | 2.1 | 4.8 | 4.8 | 4.8 | 4.8 | 4.8 | 4.8 | 4.8 | 4.8 | 4.8 |
| Physical properties | | Solubility | Good | Good | Good | Good | Good | Good | Good | Good | Good | Good | Good | Good | Good | Good | Good |
| | | Viscosity | 2.7 | 2.9 | 3 | 3 | 3.3 | 3.5 | 2.7 | 3 | 2.8 | 2.8 | 2.6 | 3 | 3 | 3 | 3 |
| | | | Excellent | Excellent | Excellent | Excellent | Excellent | Excellent | Excellent | Excellent | Excellent | Excellent | Excellent | Excellent | Excellent | Excellent | Excellent |
| Printability | | Readability | Average | Excellent | Excellent | Excellent | Excellent | Excellent | Excellent | Excellent | Excellent | Excellent | Excellent | Excellent | Excellent | Excellent | Excellent |
| | | Initial discharge | Excellent | Excellent | Excellent | Excellent | Excellent | Excellent | Excellent | Excellent | Excellent | Good | Good | Excellent | Excellent | Excellent | Excellent |
| | | Fine line reproducibility | Good | Good | Good | Good | Good | Good | Good | Good | Good | Good | Good | Good | Good | Good | Good |
| | | Intermittent resumability | Excellent | Excellent | Excellent | Excellent | Good | Average | Excellent | Excellent | Excellent | Good | Average | Excellent | Excellent | Excellent | Excellent |
| | | Tablet drying properties | Excellent | Excellent | Excellent | Excellent | Excellent | Good | Excellent | Excellent | Excellent | Excellent | Excellent | Excellent | Excellent | Excellent | Excellent |
| | | Lightfastness | Average | Excellent | Excellent | Excellent | Excellent | Excellent | Excellent | Excellent | Excellent | Excellent | Excellent | Excellent | Excellent | Excellent | Excellent |

**[Table 2]**

| | | | Examples | | | | | | | | | | | | | | |
|---|---|---|---|---|---|---|---|---|---|---|---|---|---|---|---|---|---|
| | | | #16 | #17 | #18 | #19 | #20 | #21 | #22 | #23 | #24 | #25 | #26 | #27 | #28 | #29 | #30 |
| | Colorant | Red No. 102 | 1.31% | 1.31% | 1.31% | 1.31% | 1.31% | 1.31% | 1.31% | 1.31% | 1.31% | 1.31% | 1.31% | 1.31% | 1.31% | 3.00% | 0.50% |
| | | Red No. 3 | 0.08% | 0.08% | 0.08% | 0.08% | 0.08% | 0.08% | 0.08% | 0.08% | 0.08% | 0.08% | 0.08% | 0.08% | 0.08% | 0.18% | 0.03% |
| | | Yello No. 4 | 0.08% | 0.08% | 0.08% | 0.08% | 0.08% | 0.08% | 0.08% | 0.08% | 0.08% | 0.08% | 0.08% | 0.08% | 0.08% | 0.18% | 0.03% |
| | | Blue No. 1 | 0.08% | 0.08% | 0.08% | 0.08% | 0.08% | 0.08% | 0.08% | 0.08% | 0.08% | 0.08% | 0.08% | 0.08% | 0.08% | 0.18% | 0.03% |
| | Solvent | Water | 52.05% | 48.10% | 46.10% | 42.10% | 52.00% | 55.85% | 55.35% | 54.35% | 53.35% | 51.35% | 50.35% | 49.85% | 40.35% | 27.86% | 56.41% |
| Formula | | Ethanol | 40.00% | 40.00% | 40.00% | 40.00% | 40.00% | 40.00% | 40.00% | 40.00% | 40.00% | 40.00% | 40.00% | 40.00% | 40.00% | 60.00% | 30.00% |
| | | NPA | | | | | | | | | | | | | | | |
| | | IPA | | | | | | | | | | | | | | | |
| | Wetting agent | PG | 0.05% | 4.00% | 6.00% | 10.00% | | 0.10% | 0.10% | 0.10% | 0.10% | 0.10% | 0.10% | 0.10% | 0.10% | 0.10% | 10.00% |
| | | Glycerol | | | | | 0.10% | | | | | | | | | | |
| | Viscosity modifier | Reduced isomaltulose | 6.35% | 6.35% | 6.35% | 6.35% | 6.35% | 2.50% | 3.00% | 4.00% | 5.00% | 7.00% | 8.00% | 8.50% | 18.00% | 8.50% | 3.00% |
| | Total | | 100.00% | 100.00% | 100.00% | 100.00% | 100.00% | 100.00% | 100.00% | 100.00% | 100.00% | 100.00% | 100.00% | 100.00% | 100.00% | 100.00% | 100.00% |
| | Reduced isomaltulose/Red No. 102 | | 4.8 | 4.8 | 4.8 | 4.8 | 4.8 | 1.9 | 2.3 | 3.1 | 3.8 | 5.3 | 6.1 | 6.5 | 13.7 | 2.8 | 6.0 |
| Physical properties | | Solubility | Good | Good | Good | Good | Good | Good | Good | Good | Good | Good | Good | Good | Average | Average | Good |
| | | Viscosity | 3 | 3.1 | 3.2 | 3.3 | 3 | 2.4 | 2.5 | 2.7 | 2.9 | 3.3 | 3.4 | 3.5 | 7 | 5.3 | 2.8 |
| | | | Excellent | Excellent | Excellent | Excellent | Excellent | Good | Excellent | Excellent | Excellent | Excellent | Excellent | Excellent | Average- | Average | Excellent |
| Printability | | Readability | Excellent | Excellent | Excellent | Excellent | Excellent | Excellent | Excellent | Excellent | Excellent | Excellent | Excellent | Excellent | Excellent | Excellent | Average |
| | | Initial discharge | Excellent | Excellent | Excellent | Excellent | Excellent | Good | Excellent | Excellent | Excellent | Excellent | Excellent | Excellent | Good | Good | Excellent |
| | | Fine line reproducibility | Good | Good | Good | Good | Good | Average | Good | Good | Good | Good | Good | Good | Good | Good | Good |
| | | Intermittent resumability | Excellent | Excellent | Excellent | Excellent | Excellent | Excellent | Excellent | Excellent | Excellent | Excellent | Excellent | Good | Average | Average | Excellent |
| | | Tablet drying properties | Excellent | Excellent | Good | Good | Excellent | Excellent | Excellent | Excellent | Excellent | Excellent | Excellent | Excellent | Excellent | Excellent | Good |
| | | Lightfastness | Excellent | Excellent | Excellent | Excellent | Excellent | Good | Good | Good | Excellent | Excellent | Excellent | Excellent | Excellent | Excellent | Average |

**[Table 3]**

| | | | Examples | | | | | | | | | | | | | | | |
|---|---|---|---|---|---|---|---|---|---|---|---|---|---|---|---|---|---|---|
| | | | #31 | #32 | #33 | #34 | #35 | #36 | #37 | #38 | #39 | #40 | #41 | #42 | #43 | #44 | #45 | #46 |
| | Colorant | Red No. 102 | 0.50% | 1.00% | 1.31% | 1.60% | 2.50% | 3.00% | 1.31% | 1.31% | 1.31% | 1.31% | 1.31% | 1.31% | 1.31% | 1.31% | 1.31% | 1.31% |
| | | Red No. 3 | | | | | | | | | | | | | | | | |
| | | Yello No. 4 | | | | | | | | | | | | | | | | |
| | | Blue No. 1 | | | | | | | | | | | | | | | | |
| | Solvent | Water | 53.05% | 52.55% | 52.24% | 51.95% | 51.05% | 50.55% | 57.24% | 42.24% | 52.29% | 48.34% | 53.59% | 50.59% | 56.09% | 55.59% | 50.09% | 48.59% |
| | | Ethanol | 40.00% | 40.00% | 40.00% | 40.00% | 40.00% | 40.00% | 35.00% | 50.00% | 40.00% | 40.00% | 40.00% | 40.00% | 40.00% | 40.00% | 40.00% | 40.00% |
| Formula | | NPA | | | | | | | | | | | | | | | | |
| | | IPA | | | | | | | | | | | | | | | | |
| | Wetting agent | PG | 0.10% | 0.10% | 0.10% | 0.10% | 0.10% | 0.10% | 0.10% | 0.10% | 0.05% | 4.00% | 0.10% | 0.10% | 0.10% | 0.10% | 0.10% | 0.10% |
| | | Glycerol | | | | | | | | | | | | | | | | |
| | Viscosity modifier | Reduced isomaltulose | 6.35% | 6.35% | 6.35% | 6.35% | 6.35% | 6.35% | 6.35% | 6.35% | 6.35% | 6.35% | 5.00% | 8.00% | 2.50% | 3.00% | 8.50% | 10.00% |
| | Total | | 100.00% | 100.00% | 100.00% | 100.00% | 100.00% | 100.00% | 100.00% | 100.00% | 100.00% | 100.00% | 100.00% | 100.00% | 100.00% | 100.00% | 100.00% | 100.00% |
| | Reduced isomaltulose/Red No. 102 | | 12.7 | 6.4 | 4.8 | 4.0 | 2.5 | 2.1 | 4.8 | 4.8 | 4.8 | 4.8 | 3.8 | 6.1 | 1.9 | 2.3 | 6.5 | 7.6 |
| Physical properties | | Solubility | Good | Good | Good | Good | Good | Good | Good | Good | Good | Good | Good | Good | Good | Good | Good | Good |
| | | Viscosity | 2.7 | 2.9 | 3 | 3 | 3.2 | 3.4 | 3 | 2.8 | 3 | 3.1 | 2.9 | 3.4 | 2.4 | 2.5 | 3.5 | 3.9 |
| | | | Excellent | Excellent | Excellent | Excellent | Excellent | Excellent | Excellent | Excellent | Excellent | Excellent | Excellent | Excellent | Good | Excellent | Excellent | Good |
| Printability | | Readability | Average | Excellent | Excellent | Excellent | Excellent | Excellent | Excellent | Excellent | Excellent | Excellent | Excellent | Excellent | Excellent | Excellent | Excellent | Excellent |
| | | Initial discharge | Excellent | Excellent | Excellent | Excellent | Excellent | Excellent | Excellent | Excellent | Excellent | Excellent | Excellent | Excellent | Good | Excellent | Excellent | Excellent |
| | | Fine line reproducibility | Good | Good | Good | Good | Good | Good | Good | Good | Good | Good | Good | Good | Average | Good | Good | Good |
| | | Intermittent resumability | Excellent | Excellent | Excellent | Excellent | Good | Average | Excellent | Excellent | Excellent | Excellent | Excellent | Excellent | Excellent | Excellent | Good | Good |
| | | Tablet drying properties | Excellent | Excellent | Excellent | Excellent | Excellent | Good | Excellent | Excellent | Excellent | Excellent | Excellent | Excellent | Excellent | Excellent | Excellent | Excellent |
| | | Lightfastness | Average | Excellent | Excellent | Excellent | Excellent | Excellent | Excellent | Excellent | Excellent | Excellent | Excellent | Excellent | Good | Good | Excellent | Excellent |

**[Table 4]**

| | | | Comparative Examples | | | | | | | | | | | | | |
|---|---|---|---|---|---|---|---|---|---|---|---|---|---|---|---|---|
| | | | #1 | #2 | #3 | #4 | #5 | #6 | #7 | #8 | #9 | #10 | #11 | #12 | #13 | #14 |
| | Colorant | Red No. 102 | 0.30% | 5.00% | 1.31% | 1.31% | 1.31% | 1.31% | 1.31% | 1.31% | 1.31% | 1.31% | 1.31% | 6.00% | 0.30% | 5.00% |
| | | Red No. 3 | 0.02% | 0.31% | 0.08% | 0.08% | 0.08% | 0.08% | 0.08% | 0.08% | 0.08% | 0.08% | 0.08% | 0.37% | | |
| | | Yello No. 4 | 0.02% | 0.31% | 0.08% | 0.08% | 0.08% | 0.08% | 0.08% | 0.08% | 0.08% | 0.08% | 0.08% | 0.37% | | |
| | | Blue No. 1 | 0.02% | 0.31% | 0.08% | 0.08% | 0.08% | 0.08% | 0.08% | 0.08% | 0.08% | 0.08% | 0.08% | 0.37% | | |
| | Solvent | Water | 53.19% | 47.62% | 67.00% | 27.00% | 52.09% | 37.10% | 52.00% | 52.00% | 54.35% | 57.85% | 57.85% | 68.39% | 53.25% | 48.55% |
| | | Ethanol | 40.00% | 40.00% | 25.00% | 65.00% | 40.00% | 40.00% | 40.00% | 40.00% | 40.00% | 40.00% | 40.00% | | 40.00% | 40.00% |
| Formula | | NPA | | | | | | | | | | | | | | |
| | | IPA | | | | | | | | | | | | | | |
| | Wetting agent | PG | 0.10% | 0.10% | 0.10% | 0.10% | 0.01% | 15.00% | 0.10% | 0.10% | 0.10% | 0.10% | 0.10% | | 0.10% | 0.10% |
| | | Glycerol | | | | | | | | | | | | | | |
| | | Polyethylene glycol | | | | | | | | | | | | 7.50% | | |
| | | Polyglycerol fatty acid esters | | | | | | | | | | | | 2.00% | | |
| | Viscosity modifier | Reduced isomaltulose | 6.35% | 6.35% | 6.35% | 6.35% | 6.35% | 6.35% | | | | | | 15.00% | 6.35% | 6.35% |
| | | Cellobiose | | | | | | | 6.35% | | | | | | | |
| | | Galactose | | | | | | | | 6.35% | | | | | | |
| | | Gum arabic | | | | | | | | | 4.00% | | | | | |
| | | Sodium alginate | | | | | | | | | | 0.50% | | | | |
| | | Hydroxypropyl methylcellulose | | | | | | | | | | | 0.50% | | | |
| | Total | | 100.00% | 100.00% | 100.00% | 100.00% | 100.00% | 100.00% | 100.00% | 100.00% | 100.00% | 100.00% | 100.00% | 100.00% | 100.00% | 100.00% |
| | Reduced isomaltulose/Red No. 102 | | 21.2 | 1.3 | 4.8 | 4.8 | 4.8 | 4.8 | 0.0 | 0.0 | 0.0 | 0.0 | 0.0 | 2.5 | 21.2 | 1.3 |
| Physical properties | | Solubility | Good | Average | Good | Average | Good | Good | Average | Average | Average | Poor | Good | Good | Good | Average |
| | | Viscosity | 2.8 | 4.1 | 2.7 | 2.3 | 3 | 3.5 | 2.9 | 2.9 | 6.5 | - | 4.1 | 4.6 | 2.8 | 4 |
| | | | Excellent | Good | Excellent | Good | Excellent | Excellent | Excellent | Excellent | Average- | - | Good | Good | Excellent | Good |
| Printability | | Readability | Poor | Excellent | Excellent | Excellent | Excellent | Excellent | Excellent | Excellent | Average | - | Excellent | Excellent | Poor | Excellent |
| | | Initial discharge | Excellent | Good | Excellent | Poor | Poor | Excellent | Excellent | Excellent | Poor | - | Poor | Excellent | Excellent | Good |
| | | Fine line reproducibility | Good | Good | Good | Good | Good | Good | Good | Good | Poor | - | Good | Good | Good | Good |
| | | Intermittent resumability | Excellent | Poor | Excellent | Poor | Poor | Excellent | Poor | Poor | Poor | - | Poor | Excellent | Excellent | Poor |
| | | Tablet drying properties | Excellent | Good | Poor | Excellent | Excellent | Poor | Excellent | Excellent | Excellent | - | Excellent | Poor | Excellent | Good |
| | | Lightfastness | Poor | Excellent | Excellent | Excellent | Excellent | Excellent | Average | Average | Poor | - | Poor | Good | Poor | Excellent |

As shown in Tables 1 to 4, the inkjet inks of Examples 1 to 46 were found to all have the evaluation results of the intermittent resumability of "Average" or higher, and have sufficient intermittent resumability.

Further, as shown in Tables 1 to 4, the inkjet inks of Examples 1 to 46 were found to all have the evaluation results of the tablet drying properties of "Good" or higher, and have sufficient tablet drying properties.

Further, as shown in Tables 1 to 4, the inkjet inks of Examples 1 to 46 were found to all have the evaluation results of the lightfastness of "Average" or higher, and have sufficient lightfastness.

As described above, the inkjet ink containing the Red No. 102; the reduced isomaltulose; water, the monohydric alcohol, and the wetting agent as the solvent, in which the monohydric alcohol includes at least one type among ethanol, NPA, and IPA, the wetting agent includes at least one type of glycerol and PG, the compounding ratio of the Red No. 102 is in the range of 0.5 mass% or more and 3.0 mass% or less based on the total mass of the inkjet ink, the compounding ratio of the monohydric alcohol is in the range of 30 mass% or more and 60 mass% or less based on the total mass of the inkjet ink, and the compounding ratio of the wetting agent is in the range of 0.05 mass% or more and 10 mass% or less based on the total mass of the inkjet ink can provide an inkjet ink having drying properties (tablet drying properties), lightfastness, and discharge stability (intermittent resumability) and tablet printed matter including printed parts printed with the inkjet ink.

Further, the present invention can take the following compositions, for example.
(1) An inkjet ink containing: Red No. 102; reduced isomaltulose; and, as a solvent, water, monohydric alcohol, and a wetting agent, in which
   the monohydric alcohol includes at least one type among ethanol, NPA, and IPA,
   the wetting agent includes at least one type of glycerol and PG,
   the compounding ratio of the Red No. 102 is in the range of 0.5 mass% or more and 3.0 mass% or less based on the total mass of the inkjet ink,
   the compounding ratio of the monohydric alcohol is in the range of 30 mass% or more and 60 mass% or less based on the total mass of the inkjet ink, and
   the compounding ratio of the wetting agent is in the range of 0.05 mass% or more and 10 mass% or less based on the total mass of the inkjet ink.
(2) The inkjet ink according to (1) above, in which the compounding amount of the reduced isomaltulose is in the range of 3.0 mass% or more and 8.5 mass% or less based on the total mass of the inkjet ink.
(3) An inkjet ink containing: Red No. 102; reduced isomaltulose; and, as a solvent, water, monohydric alcohol, and a wetting agent, in which
   the monohydric alcohol includes at least one type among ethanol, NPA, and IPA,
   the wetting agent includes at least one type of glycerol and PG,
   the compounding ratio of the Red No. 102 is in the range of 1 mass% or more and 2.5 mass% or less based on the total mass of the inkjet ink,
   the compounding ratio of the monohydric alcohol is in the range of 35 mass% or more and 55 mass% or less based on the total mass of the inkjet ink,
   the compounding ratio of the wetting agent is in the range of 0.05 mass% or more and 6 mass% or less based on the total mass of the inkjet ink, and
   the compounding amount of the reduced isomaltulose is in the range of 4 mass% or more and 8 mass% or less based on the total mass of the inkjet ink.
(4) An inkjet ink containing: Red No. 102; reduced isomaltulose; and, as a solvent, water, monohydric alcohol, and a wetting agent, in which
   the monohydric alcohol includes at least one type among ethanol, NPA, and IPA,
   the wetting agent includes at least one type of glycerol and PG,
   the compounding ratio of the Red No. 102 is in the range of 1 mass% or more and 1.6 mass% or less based on the total mass of the inkjet ink,
   the compounding ratio of the monohydric alcohol is in the range of 35 mass% or more and 50 mass% or less based on the total mass of the inkjet ink,
   the compounding ratio of the wetting agent is in the range of 0.05 mass% or more and 4 mass% or less based on the total mass of the inkjet ink, and
   the compounding amount of the reduced isomaltulose is in the range of 5 mass% or more and 8 mass% or less based on the total mass of the inkjet ink.
(5) The inkjet ink according to any one of (1) to (4) above, in which the inkjet ink has viscosity in the range of 1.0 mPa·s or more and 7.0 mPa·s or less.
(6) The inkjet ink according to any one of (1) to (4) above, in which the inkjet ink has viscosity in the range of 2.0 mPa·s or more and 6.0 mPa·s or less.
(7) The inkjet ink according to any one of (1) to (4) above, in which the inkjet ink has viscosity in the range of 2.0 mPa·s or more and 5.0 mPa·s or less.
(8) An inkjet ink containing: Red No. 102; reduced isomaltulose; and, as a solvent, water, monohydric alcohol, and a wetting agent, in which
   the monohydric alcohol includes at least one type among ethanol, NPA, and IPA,
   the wetting agent includes at least one type of glycerol and PG,
   the compounding ratio of the Red No. 102 is in the range of 1 mass% or more and 1.31 mass% or less based on the total mass of the inkjet ink,
   the compounding ratio of the monohydric alcohol is in the range of 30 mass% or more and 50 mass% or less based on the total mass of the inkjet ink,
   the compounding ratio of the wetting agent is in the range of 0.05 mass% or more and 4 mass% or less based on the total mass of the inkjet ink, and
   the compounding amount of the reduced isomaltulose is in the range of 4 mass% or more and 8 mass% or less based on the total mass of the inkjet ink.
(9) The inkjet ink according to any one of (1) to (8) above, in which:
   only the ethanol, only the NPA, or only the IPA is contained as the monohydric alcohol; and
   only the glycerol or only the PG is contained as the wetting agent.
(10) Tablet printed matter including: a printed part printed using the inkjet ink according to any one of (1) to (9) above.

The scope of the present invention is not limited to the illustrated and described exemplary embodiments, and also encompasses all the embodiments that achieve effects equivalent to the intended effects of the present invention. Further, the scope of the present invention is not limited to combinations of the features of the invention defined by claims, and can be defined by any desired combinations of specific features among all the disclosed features.

### Reference Signs List

1: substrate of tablet
1S: surface
3: printed image
4: specific dye
5: uncoated tablet printed matter
7: film coating layer
9: film-coated tablet printed matter
11: uncoated tablet printed image (solid image)
13: film-coated tablet printed image (two-dimensional barcode)

## Claims

1. An inkjet ink comprising:
Red No. 102;
reduced isomaltulose; and
as a solvent, water, monohydric alcohol, and a wetting agent, wherein
the monohydric alcohol includes at least one type among ethanol, normal propyl alcohol (NPA), and isopropyl alcohol (IPA),
the wetting agent includes at least one type of glycerol and propylene glycol (PG),
a compounding ratio of the Red No. 102 is in a range of 0.5 mass% or more and 3.0 mass% or less based on a total mass of the inkjet ink,
a compounding ratio of the monohydric alcohol is in a range of 30 mass% or more and 60 mass% or less based on the total mass of the inkjet ink, and
a compounding ratio of the wetting agent is in a range of 0.05 mass% or more and 10 mass% or less based on the total mass of the inkjet ink.

2. The inkjet ink according to claim 1, wherein a compounding amount of the reduced isomaltulose is in a range of 3.0 mass% or more and 8.5 mass% or less based on the total mass of the inkjet ink.

3. An inkjet ink comprising:
Red No. 102;
reduced isomaltulose; and
as a solvent, water, monohydric alcohol, and a wetting agent, wherein
the monohydric alcohol includes at least one type among ethanol, normal propyl alcohol (NPA), and isopropyl alcohol (IPA),
the wetting agent includes at least one type of glycerol and propylene glycol (PG),
a compounding ratio of the Red No. 102 is in a range of 1 mass% or more and 2.5 mass% or less based on a total mass of the inkjet ink,
a compounding ratio of the monohydric alcohol is in a range of 35 mass% or more and 55 mass% or less based on the total mass of the inkjet ink,
a compounding ratio of the wetting agent is in a range of 0.05 mass% or more and 6 mass% or less based on the total mass of the inkjet ink, and
a compounding amount of the reduced isomaltulose is in a range of 4 mass% or more and 8 mass% or less based on the total mass of the inkjet ink.

4. An inkjet ink comprising:
Red No. 102;
reduced isomaltulose; and
as a solvent, water, monohydric alcohol, and a wetting agent, wherein
the monohydric alcohol includes at least one type among ethanol, normal propyl alcohol (NPA), and isopropyl alcohol (IPA),
the wetting agent includes at least one type of glycerol and propylene glycol (PG),
a compounding ratio of the Red No. 102 is in a range of 1 mass% or more and 1.6 mass% or less based on a total mass of the inkjet ink,
a compounding ratio of the monohydric alcohol is in a range of 35 mass% or more and 50 mass% or less based on the total mass of the inkjet ink,
a compounding ratio of the wetting agent is in a range of 0.05 mass% or more and 4 mass% or less based on the total mass of the inkjet ink, and
a compounding amount of the reduced isomaltulose is in a range of 5 mass% or more and 8 mass% or less based on the total mass of the inkjet ink.

5. The inkjet ink according to claim 2, wherein the inkjet ink has viscosity in a range of 1.0 mPa·s or more and 7.0 mPa·s or less.

6. The inkjet ink according to claim 2, wherein the inkjet ink has viscosity in a range of 2.0 mPa·s or more and 6.0 mPa·s or less.

7. The inkjet ink according to claim 2, wherein the inkjet ink has viscosity in a range of 2.0 mPa·s or more and 5.0 mPa·s or less.

8. An inkjet ink comprising:
Red No. 102;
reduced isomaltulose; and
as a solvent, water, monohydric alcohol, and a wetting agent, wherein
the monohydric alcohol includes at least one type among ethanol, normal propyl alcohol (NPA), and isopropyl alcohol (IPA),
the wetting agent includes at least one type of glycerol and propylene glycol (PG),
a compounding ratio of the Red No. 102 is in a range of 1 mass% or more and 1.31 mass% or less based on a total mass of the inkjet ink,
a compounding ratio of the monohydric alcohol is in a range of 30 mass% or more and 50 mass% or less based on the total mass of the inkjet ink,
a compounding ratio of the wetting agent is in a range of 0.05 mass% or more and 4 mass% or less based on the total mass of the inkjet ink, and
a compounding amount of the reduced isomaltulose is in a range of 4 mass% or more and 8 mass% or less based on the total mass of the inkjet ink.

9. The inkjet ink according to any one of claims 1 to 8, wherein:
only the ethanol, only the NPA, or only the IPA is contained as the monohydric alcohol; and
only the glycerol or only the PG is contained as the wetting agent.

10. Tablet printed matter comprising:
a printed part printed using the inkjet ink according to any one of claims 1 to 9.
